(19) Europäisches Patentamt
European Patent Office
Office européen des brevets

(11) EP 3 192 836 B1

(12) **EUROPEAN PATENT SPECIFICATION**

(45) Date of publication and mention of the grant of the patent:
**24.07.2019 Bulletin 2019/30**

(21) Application number: **15839766.1**

(22) Date of filing: **03.09.2015**

(51) Int Cl.:
***B29C 45/00*** *(2006.01)* ***B29C 48/00*** *(2019.01)*

(86) International application number:
**PCT/JP2015/075024**

(87) International publication number:
**WO 2016/039243 (17.03.2016 Gazette 2016/11)**

(54) **THERMOPLASTIC RESIN COMPOSITION AND MOLDED BODY USING SAME**
THERMOPLASTISCHE HARZZUSAMMENSETZUNG UND FORMKÖRPER DAMIT
COMPOSITION DE RÉSINE THERMOPLASTIQUE ET PIÈCE MOULÉE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2014 JP 2014182275**
**30.01.2015 JP 2015016952**

(43) Date of publication of application:
**19.07.2017 Bulletin 2017/29**

(73) Proprietor: **Mitsubishi Gas Chemical Company, Inc.**
**Tokyo 100-8324 (JP)**

(72) Inventors:
- **HIROKANE Takeshi**
  **Hiratsuka-shi**
  **Kanagawa 254-0016 (JP)**
- **AKIYAMA Mitsuhiro**
  **Kanuma-shi**
  **Tochigi 322-0014 (JP)**
- **ARAI Hirokatsu**
  **Hiratsuka-shi**
  **Kanagawa 254-0016 (JP)**
- **IWASAKI Atsuko**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**EP-A1- 2 752 456** **WO-A1-2014/017415**
**JP-A- 2003 246 925** **JP-A- 2005 002 237**
**JP-A- 2008 189 942** **JP-A- 2011 219 667**
**JP-A- 2013 121 991**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a thermoplastic resin composition, which contains a polycarbonate resin and a polyester resin that contains a diol unit having a cyclic acetal skeleton.

BACKGROUND ART

The polycarbonate resin (hereinafter sometimes referred to as "PC") has not only a high heat distortion temperature and excellent heat resistance, but also excellent impact resistance and transparency, and is used in a wide range of fields including exteriors, electrical and electronic applications, optical disk substrates and automotive applications. However, PC alone has a viscosity in a molten state higher than that of other thermoplastic resins, resulting in poor molding processability, and in addition, it has a problem that properties such as chemical resistance and surface hardness are insufficient.

In order to improve chemical resistance of PC, it has been tried to perform melting and mixing of a saturated polyester resin as a modifier. For example, it has been proposed to use polyethylene terephthalate (hereinafter sometimes referred to as "PET") as a modifier for PC. However, PET cannot be compatibilized with PC, and it is known that transparency of PC is significantly impaired by addition of PET.

When using a polybutyrene terephthalate resin (hereinafter sometimes referred to as "PBT") as a modifier for PC, transparency obtained is comparatively good, but not sufficient. In addition, there is a problem of significant reduction in heat resistance.

A thermoplastic resin composition, which comprises a PC and a modified PET in which 40 mol% of all the diol units is a 1,4-cyclohexanedimethanol unit, has been proposed (see Patent Document 1). This resin composition has good transparency, but has problems of reduction in heat resistance and insufficient chemical resistance.

A method in which a copolyester containing a naphthalene dicarboxylic acid unit at a specific ratio as a dicarboxylic acid unit in resin is used as a modifier for PC has been proposed (see Patent Document 2). However, there is a problem that transparency is insufficient when the naphthalene dicarboxylic acid unit is contained at a ratio required for the improvement of chemical resistance.

Meanwhile, polyester resins such as PET, PBT and polyethylene naphthalate generally have chemical resistance, moldability, surface hardness, etc. superior to those of PC. However, heat resistance, mechanical strength (in particular, impact resistance) and transparency of the polyester resins are inferior to those of PC, and it is desired to improve these physical properties.

As a method for improving heat resistance, impact resistance, etc. of a polyester resin, a thermoplastic resin composition obtained by melting and mixing of PC with a polyester resin has been proposed. However, as already described, this resin composition has a problem of significantly poor transparency. Therefore, there was no known thermoplastic resin composition composed of a PC and a polyester resin, having not only good transparency, heat resistance, chemical resistance and mechanical strength (in particular, impact resistance), but also good moldability, printability, etc.

In this regard, Patent Documents 3 and 4 disclose that the above-described properties are reinforced by blending a PC and a polyester resin containing a diol having a cyclic acetal skeleton, thereby obtaining a thermoplastic resin composition having not only excellent transparency, heat resistance, chemical resistance and mechanical strength, but also excellent moldability, printability, etc.

However, it is known that melt-kneading of a PC and a polyester resin causes an exchange reaction thereof, and that the exchange reaction is accelerated by the addition of a transesterification catalyst (see Non-Patent Document 1). For this reason, in the case where the activity of a polymerization catalyst used for the production of a polyester resin remains, when producing a resin composition and a molded body thereof by mixing the polyester resin with PC, there are problems of abnormal increase in the molecular weight, reduction in moldability due to generation of bubbles, reduction in color tone and easily impaired outer appearance.

Patent Document 5 discloses a decorative film, which is formed from a thermoplastic resin composition consisting of a PC and a polyester resin containing a diol having a cyclic acetal skeleton.

Patent Document 6 discloses a thermoplastic resin composition consisting of a PC, a polyester resin containing a diol having a cyclic acetal skeleton and a specific phosphorus compound.

PRIOR ART DOCUMENTS

PATENT DOCUMENTS

Patent Document 1: Japanese Laid-Open Patent Publication No. 2000-63641
Patent Document 2: Japanese Laid-Open Patent Publication No. 2000-103948
Patent Document 3: Japanese Laid-Open Patent Publication No. 2003-246925
Patent Document 4: Japanese Laid-Open Patent Publication No. 2005-2237
Patent Document 5: Japanese Laid-Open Patent Publication No. 2011-219667
Patent Document 6: Japanese Laid-Open Patent Publication No. 2013-121991

NON-PATENT DOCUMENTS

Non-Patent Document 1: Kazuo Yuki Ed., Handbook of Saturated Polyester Resins (in Japanese), pp. 454-456, Nikkan Kogyo Shimbun, Ltd., published on December 22, 1989

SUMMARY OF THE INVENTION

PROBLEMS TO BE SOLVED BY THE INVENTION

Regarding the decorative film formed from the thermoplastic resin composition comprising a polyester resin containing a diol having a cyclic acetal skeleton disclosed in Patent Document 5, it is desired to further improve the range of conditions for molding, outer appearance, etc.

Similarly, regarding the thermoplastic resin composition consisting of a PC, a polyester resin containing a diol having a cyclic acetal skeleton and a specific phosphorus compound disclosed in Patent Document 6, it is desired to further improve the range of conditions for molding, outer appearance of molded bodies, etc.

Under the above-described circumstances, it is desired to provide a thermoplastic resin composition, which can solve various problems that may be caused when a PC and a polyester resin are mixed and then molded (e.g., outer appearance, transparency, thermal stability during molding, range of conditions for molding, etc.) while maintaining characteristics respectively possessed by the PC and the polyester resin.

In consideration of the above-described circumstances, the purpose of the present invention is to provide a thermoplastic resin composition comprising a polycarbonate resin and a polyester resin, which is excellent in thermal stability and can suppress abnormal increase in the molecular weight and generation of bubbles, etc. during molding, wherein as a result, a molded body having excellent outer appearance, transparency, etc. can be obtained thereby.

MEANS FOR SOLVING THE PROBLEMS

The present inventors diligently made researches in order to solve the above-described problems, and found that a thermoplastic resin composition which comprises a polycarbonate resin and a polyester resin that contains a diol unit having a cyclic acetal skeleton, wherein the polyester resin contains specific amounts of phosphorus atoms and titanium atoms and the weight ratio of the phosphorus atoms to the titanium atoms is within a specific range, has excellent thermal stability, and that as a result, a molded body having excellent outer appearance, transparency, etc. can be obtained thereby, and thus the present invention was achieved.

Specifically, the present invention is, for example, as follows:

[1] A thermoplastic resin composition, which comprises: a polycarbonate resin (A); and a polyester resin (B) which contains diol units having a cyclic acetal skeleton at a ratio of 20 to 60 mol% relative to all diol units constituting the polyester resin (B), and which satisfies (1) to (4) below:

(1) the polyester resin (B) contains 20 to 150 ppm of phosphorus atoms derived from a monophosphate and/or a monophosphite;
(2) the polyester resin (B) contains 3 to 25 ppm of titanium atoms;
(3) the weight ratio between the phosphorus atoms and the titanium atoms in the polyester resin (B) (P/Ti) is 2.5 to 20.0; and
(4) the weight ratio of the polycarbonate resin (A) to the total weight of the polycarbonate resin (A) and the polyester resin (B) is 2 to 99.5 wt%.

[2] The thermoplastic resin composition according to item [1], wherein the polycarbonate resin (A) is a polycarbonate resin containing repeat units represented by general formula (1) and/or general formula (2):

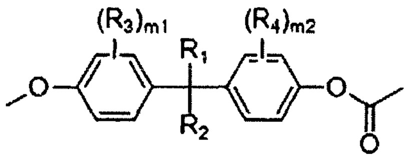

(1)

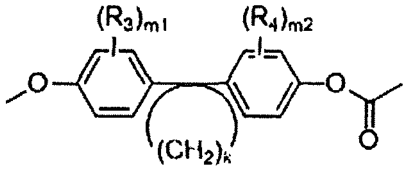

(2)

wherein in general formulae (1) and (2) above: $R_1$ and $R_2$ are each independently selected from a hydrogen atom, a non-cyclic hydrocarbon group having 1 to 10 carbon atoms, an aryl group having 6 to 18 carbon atoms and an alicyclic hydrocarbon group having 5 to 10 carbon atoms; $R_3$ and $R_4$ are each independently selected from a halogen atom, an aliphatic hydrocarbon group having 1 to 10 carbon atoms, an aryl group having 6 to 18 carbon atoms, an oxyalkyl group having 1 to 10 carbon atoms and an oxyaryl group having 6 to 18 carbon atoms; m1 and m2 are each independently 0 to 4; and k is 4 or 5.

[3] The thermoplastic resin composition according to item [1], wherein the polycarbonate resin (A) is a polycarbonate of bisphenol A.

[4] The thermoplastic resin composition according to any one of items [1] to [3], wherein the diol units having a cyclic acetal skeleton are derived from at least one diol selected from:

a diol represented by general formula (3):

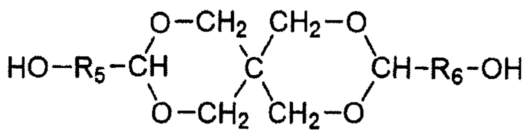

(3)

wherein $R_5$ and $R_6$ each independently represent a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms; and

a diol represented by general formula (4):

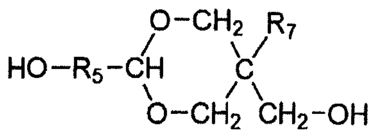

(4)

wherein: $R_5$ is as defined with respect to formula (3); and $R_7$ represents a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.

[5] The thermoplastic resin composition according to any one of items [1] to [3], wherein the diol units having a cyclic acetal skeleton are diol units derived from 3,9-bis(1,1-dimethyl-2-hydroxyethyl)-2,4,8,10-tetraoxaspiro[5.5]undecane or diol units derived from 5-methylol-5-ethyl-2-(1,1-dimethyl-2-hydroxyethyl)-1,3-dioxane.

[6] The thermoplastic resin composition according to any one of items [1] to [5], wherein diol units other than the diol units having a cyclic acetal skeleton constituting the polyester resin (B) are diol units derived from one or more types of diols selected from the group consisting of ethylene glycol, diethylene glycol, trimethylene glycol, 1,4-butanediol and 1,4-cyclohexanedimethanol.

[7] The thermoplastic resin composition according to any one of items [1] to [6], wherein the polyester resin (B)

contains aromatic dicarboxylic acid units at a ratio of 70 mol% or more relative to all dicarboxylic acid units constituting the polyester resin (B).

[8] The thermoplastic resin composition according to item [7], wherein the aromatic dicarboxylic acid units are dicarboxylic acid units derived from one or more types of dicarboxylic acids selected from the group consisting of terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid.

[9] The thermoplastic resin composition according to any one of items [1] to [8], wherein the titanium atoms in the polyester resin (B) are derived from a titanate compound.

[9-1] The thermoplastic resin composition according to any one of items [1] to [9], wherein the melt viscosity of the polyester resin (B) at the time of measuring at a measurement temperature of 240°C and at a shear rate of 100 $s^{-1}$ is 300 to 5000 Pa·s.

[9-2] The thermoplastic resin composition according to any one of items [1] to [9-1], wherein the molecular weight distribution of the polyester resin (B) is 2.5 to 12.0.

[9-3] The thermoplastic resin composition according to any one of items [1] to [9-2], wherein when melt-kneading using a single screw extruder equipped with a T-die (manufactured by Research Laboratory of Plastics Technology Co., Ltd., 32 mmφ, L/D: 32, full flight screw) under the following conditions: cylinder temperature C1: 220°C, C2 and C3: 250°C, C4 to T-die: 270°C, and screw rotation speed: 20 rpm, the rate of change of the number-average molecular weight (Mn), which is calculated from the molecular weights of the polycarbonate resin (A) and the polyester resin (B) before melt-kneading and the molecular weight of the thermoplastic resin composition after melt-kneading according to the below-described formula, is -20 to 20%:

Molecular weight before melt-kneading (Mn, Mw) = {molecular weight of polycarbonate resin (A) × ratio of polycarbonate resin (A)} + {molecular weight of polyester resin (B) × ratio of polyester resin (B)}

Rate of change of Mn (%) = {(Mn of thermoplastic resin composition - Mn before melt-kneading)/Mn before melt-kneading} × 100

[9-4] The thermoplastic resin composition according to item [9-3], wherein when melt-kneading under the conditions described in item [9-3], the rate of change of the weight-average molecular weight (Mw), which is calculated from the molecular weights of the polycarbonate resin (A) and the polyester resin (B) before melt-kneading and the molecular weight of the thermoplastic resin composition after melt-kneading according to the below-described formula, is -25 to 25%:

Rate of change of Mw (%) = [(Mw of thermoplastic resin composition - Mw before melt-kneading)/Mw before melt-kneading] × 100

[9-5] The thermoplastic resin composition according to any one of items [1] to [9-4], wherein the melt viscosity of the thermoplastic resin composition at the time of measuring at a temperature of 240°C and at a shear rate of 100 $s^{-1}$ is 300 to 5000 Pa·s.

[9-6] The thermoplastic resin composition according to any one of items [1] to [9-4], wherein the melt viscosity of the thermoplastic resin composition at the time of measuring at a temperature of 240°C and at a shear rate of 100 $s^{-1}$ is 100 to 3000 Pa·s.

[10] A molded body containing the thermoplastic resin composition according to any one of items [1] to [9-6].

[11] An extrusion molded body containing the thermoplastic resin composition according to any one of items [1] to [9-6].

[11-1] The extrusion molded body according to item [11], wherein the total light transmittance of the extrusion molded body (thickness: 500 μm) is 87% or higher.

[11-2] The extrusion molded body according to item [11] or [11-1], wherein the haze value of the extrusion molded body (thickness: 500 μm) is 4% or lower.

[12] An injection molded body containing the thermoplastic resin composition according to any one of items [1] to [9-6].

[12-1] The injection molded body according to item [12], wherein the total light transmittance of the injection molded body (thickness: 3.2 mm) is 87% or higher.
[12-2] The injection molded body according to item [12] or [12-1], wherein the haze value of the injection molded body (thickness: 3.2 mm) is 4% or lower.

Hereinafter, the inventions recited in the claims of Japanese Patent Application No. 2015-016952, to which priority is claimed by the present application, will be additionally described.

[21] A thermoplastic resin composition, which mainly consists of: a polycarbonate resin (A); and a polyester resin (B) which contains diol units having a cyclic acetal skeleton at a ratio of 20 to 60 mol% relative to diol units, and which satisfies (1) to (4) below:

(1) the polyester resin (B) contains 20 to 150 ppm of phosphorus atoms derived from a monophosphate and/or a monophosphite;
(2) the polyester resin (B) contains 5 to 25 ppm of titanium atoms;
(3) the weight ratio between the phosphorus atoms and the titanium atoms in the polyester resin (B) (P/Ti) is 2.5 to 20.0; and
(4) the weight ratio of the polycarbonate resin (A) to the total of the polycarbonate resin (A) and the polyester resin (B) is 2 to 99.5 wt%.

[22] The thermoplastic resin composition according to item [21], wherein the polycarbonate resin (A) is a polycarbonate resin composed of repeat units represented by general formula (1) and/or general formula (2):

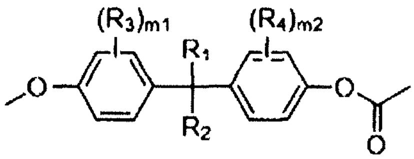
(1)

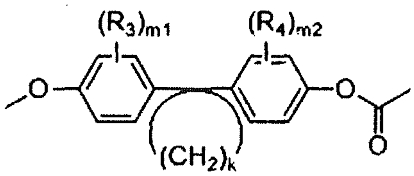
(2)

wherein in general formulae (1) and (2) above: $R_1$ and $R_2$ are each independently selected from a hydrogen atom, a non-cyclic hydrocarbon group having 1 to 10 carbon atoms and an alicyclic hydrocarbon group having 5 to 10 carbon atoms; $R_3$ and $R_4$ are each independently selected from a halogen atom, an aliphatic hydrocarbon group having 1 to 10 carbon atoms, an aryl group having 6 to 18 carbon atoms, an oxyalkyl group having 1 to 10 carbon atoms and an oxyaryl group having 6 to 18 carbon atoms; m1 and m2 are each independently 0 to 4; and k is 4 or 5.
[23] The thermoplastic resin composition according to item [21], wherein the polycarbonate resin (A) is a polycarbonate of bisphenol A.
[24] The thermoplastic resin composition according to any one of items [21] to [23], wherein the diol units having a cyclic acetal skeleton are diol units derived from a diol represented by general formula (3):

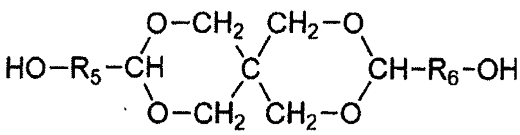
(3)

wherein $R_5$ and $R_6$ each independently represent a hydrocarbon group selected from the group consisting of an aliphatic hydrocarbon group having 1 to 10 carbon atoms, an alicyclic hydrocarbon group having 3 to 10 carbon

atoms and an aromatic hydrocarbon group having 6 to 10 carbon atoms, or by general formula (4):

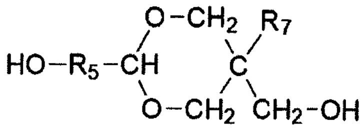

(4)

wherein: $R_5$ is as described above; and $R_7$ represents a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.

[25] The thermoplastic resin composition according to any one of items [21] to [23], wherein the diol units having a cyclic acetal skeleton are diol units derived from 3,9-bis(1,1-dimethyl-2-hydroxyethyl)-2,4,8,10-tetraoxaspiro[5.5]undecane or diol units derived from 5-methylol-5-ethyl-2-(1,1-dimethyl-2-hydroxyethyl)-1,3-dioxane.

[26] The thermoplastic resin composition according to any one of items [21] to [25], wherein diol units other than the diol units having a cyclic acetal skeleton are diol units derived from one or more types of diols selected from the group consisting of ethylene glycol, diethylene glycol, trimethylene glycol, 1,4-butanediol and 1,4-cyclohexanedimethanol.

[27] The thermoplastic resin composition according to any one of items [21] to [26], wherein the polyester resin (B) is a polyester resin containing aromatic dicarboxylic acid units at a ratio of 70 mol% or more relative to the dicarboxylic acid units.

[28] The thermoplastic resin composition according to item [27], wherein the aromatic dicarboxylic acid units are dicarboxylic acid units derived from one or more types of dicarboxylic acids selected from the group consisting of terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid.

[29] The thermoplastic resin composition according to any one of items [21] to [28], wherein the titanium atoms in the polyester resin (B) are derived from a titanate compound.

[30] A molded body obtained by using the thermoplastic resin composition according to any one of items [21] to [29].

[31] An extrusion molded body obtained by using the thermoplastic resin composition according to any one of items [21] to [29].

[32] An injection molded body obtained by using the thermoplastic resin composition according to any one of items [21] to [29].

## ADVANTAGEOUS EFFECT OF THE INVENTION

According to the present invention, it is possible to produce a thermoplastic resin composition comprising a polycarbonate resin and a polyester resin which is excellent in thermal stability. Because of excellent thermal stability, the resin composition according to the present embodiment can be stably molded under a wide range of conditions. As a result, it is possible to obtain an injection-molded body, sheet, film or the like having good outer appearance, and such products can be utilized in a wide range of fields.

## EMBODIMENTS FOR CARRYING OUT THE INVENTION

Hereinafter, the mode for carrying out the present invention (hereinafter just referred to as "the present embodiment") will be described in detail. The present embodiment described below is provided for illustrative purposes, and it is not intended that the present invention be limited only to the content described below.

According to one embodiment of the present invention, it is possible to provide a thermoplastic resin composition, which comprises: a polycarbonate resin (A); and a polyester resin (B) which contains diol units having a cyclic acetal skeleton at a ratio of 20 to 60 mol% relative to all diol units constituting the polyester resin (B), and which satisfies (1) to (4) below:

(1) the polyester resin (B) contains 20 to 150 ppm of phosphorus atoms derived from a monophosphate and/or a monophosphite;
(2) the polyester resin (B) contains 3 to 25 ppm of titanium atoms;
(3) the weight ratio between the phosphorus atoms and the titanium atoms in the polyester resin (B) (P/Ti) is 2.5 to 20.0; and
(4) the weight ratio of the polycarbonate resin (A) to the total weight of the polycarbonate resin (A) and the polyester resin (B) is 2 to 99.5 wt%.

When the conditions described in (1) to (4) above are satisfied, the thermoplastic resin composition according to the above-described embodiment has excellent thermal stability. As a result, abnormal increase in the molecular weight, poor appearance due to bubbles, etc. do not easily occur at the time of molding of a thermoplastic resin, and it is possible to obtain a molded body having excellent outer appearance, transparency, etc. under a wide range of conditions (e.g., temperature, residence time and molding method). Conventionally, when using a large-sized equipment for molding, there is a problem that poor outer appearance easily occurs due to a heat history undergone for a long period of time and/or at a high temperature (e.g., longer residence time and increase in the temperature of resin due to the generation of shearing heat). However, when using the thermoplastic resin composition according to the above-described embodiment, it is not easily affected by heat, and therefore a molded body having good outer appearance can be obtained even when a large-sized equipment is used. Accordingly, it can be said that the thermoplastic resin composition according to the embodiment is particularly useful when industrially producing a resin-molded body.

The thermoplastic resin composition of the present embodiment is mainly composed of a polycarbonate resin (A) and a polyester resin (B) which contains diol units having a cyclic acetal skeleton at a ratio of 20 to 60 mol% relative to all diol units constituting the polyester resin (B). In this regard, the word "mainly" means that the total amount of the polycarbonate resin (A) and the polyester resin (B) in the thermoplastic resin composition is 90 wt% or more, and the total amount is preferably 95 wt% or more, and more preferably 100 wt%.

In the thermoplastic resin composition of the present embodiment, the weight ratio of the polycarbonate resin (A) to the total weight of the polycarbonate resin (A) and the polyester resin (B) is 2 to 99.5 wt%. The above-described weight ratio is preferably 10 to 98 wt%, more preferably 30 to 95 wt%, and even more preferably 50 to 90 wt%. When the above-described weight ratio is 2 to 99.5 wt%, the thermoplastic resin composition is excellent in transparency, heat resistance, chemical resistance, mechanical strength and molding processability. It is comparatively preferred that the content of the polycarbonate resin (A) is almost equal to or more than the content of the polyester resin (B).

Various characteristics of the thermoplastic resin composition of the present embodiment can be exerted depending on the component ratio of the polycarbonate resin (A) and the polyester resin (B). Specifically, by increasing the ratio of the polycarbonate resin (A) within the aforementioned weight ratio, particularly excellent heat resistance and mechanical strength can be obtained, and by increasing the ratio of the polyester resin (B), particularly excellent chemical resistance and molding processability can be obtained.

The polycarbonate resin (A) to be used in the present embodiment is a polycarbonate polymer or copolymer which may have a branch structure, which can be obtained by reacting an aromatic dihydroxy compound and optionally a small amount of a polyhydroxy compound, etc. with phosgene or carbonic acid diester. An end terminator may exist at the time of the production of the polycarbonate resin (A).

Examples of the polycarbonate resin (A) include a polycarbonate resin containing repeat units represented by general formula (1) and/or general formula (2) below and a polycarbonate resin composed of repeat units represented by general formula (1) and/or general formula (2) below. Further, the repeat units represented by general formula (1) and general formula (2) include those which were branched by a side reaction.

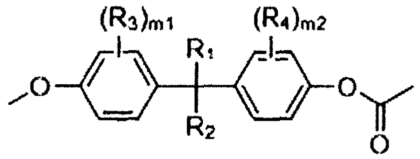

(1)

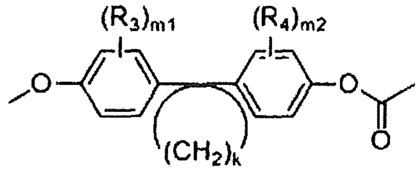

(2)

(In general formulae (1) and (2) above: $R_1$ and $R_2$ are each independently selected from a hydrogen atom, a non-cyclic hydrocarbon group having 1 to 10 carbon atoms, an aryl group having 6 to 18 carbon atoms and an alicyclic hydrocarbon group having 5 to 10 carbon atoms; $R_3$ and $R_4$ are each independently selected from a halogen atom, an aliphatic hydrocarbon group having 1 to 10 carbon atoms, an aryl group having 6 to 18 carbon atoms, an oxyalkyl group having 1 to 10 carbon atoms and an oxyaryl group having 6 to 18 carbon atoms; m1 and m2 are each independently 0 to 4; and k is 4 or 5.)

In general formulae (1) and (2) above: $R_1$ and $R_2$ are preferably selected from a hydrogen atom, a non-cyclic hydrocarbon group having 1 to 4 carbon atoms and an aryl group having 6 to 8 carbon atoms; $R_3$ and $R_4$ are preferably

selected from a halogen atom, a non-cyclic hydrocarbon group having 1 to 4 carbon atoms and an aryl group having 6 to 8 carbon atoms; m1 and m2 are preferably 0 to 2; and k is preferably 4 or 5.

The aromatic hydroxy compound constituting the polycarbonate resin (A) to be used in the present embodiment is not particularly limited, and examples thereof include: bis(hydroxyaryl)alkanes such as 2,2-bis(4-hydroxyphenyl)propane (also known as bisphenol A), 2,2-bis(3,5-dibromo-4-hydroxyphenyl)propane (also known as tetrabromobisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxy-3-methylphenyl)propane, 1,1-bis(3-tert-butyl-4-hydroxyphenyl)propane, 2,2-bis(3-bromo-4-hydroxyphenyl)propane and 2,2-bis(3,5-dichloro-4-hydroxyphenyl)propane; bis(hydroxyaryl)cycloalkanes such as 1,1-bis(4-hydroxyphenyl)cyclopentane, 1,1-bis(4-hydroxyphenyl)cyclohexane (bisphenol Z), 1,1-bis(3,5-dibromo-4-hydroxyphenyl)cyclohexane and 1,1-bis(3,5-dichloro-4-hydroxyphenyl)cyclohexane; bis(hydroxyaryl)arylalkanes such as 1,1-bis(4-hydroxyphenyl)-1-phenylethane and 1,1-bis(4-hydroxyphenyl)diphenylmethane; dihydroxydiaryl ethers such as 4,4'-dihydroxydiphenyl ether and 4,4'-dihydroxy-3,3'-dimethyldiphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4-dihydroxydiphenyl sulfone and 4,4'-dihydroxy-3,3'-dimethyldiphenyl sulfone; hydroquinone; resorcin; and 4,4'-dihydroxydiphenyl. Among them, bisphenol A, tetrabromobisphenol A and bisphenol Z are more preferred. From the viewpoint of heat resistance, mechanical performance, economic efficiency, etc. of the thermoplastic resin composition, bisphenol A is particularly preferred. Specifically, the polycarbonate resin (A) is particularly preferably a polycarbonate of bisphenol A.

Examples of the end terminator include a compound having a monovalent phenolic hydroxyl group, including not only phenol, p-t-butylphenol, tribromophenol, etc., but also long-chain alkyl phenols, aliphatic carboxylic acid chlorides, aliphatic carboxylic acids, aromatic carboxylic acids, aromatic acid chlorides, hydroxybenzoic acid alkyl esters, and alkylether phenols. Moreover, a compound having a reactive double bond may also be used as the end terminator, and examples thereof include: unsaturated carboxylic acids such as acrylic acid, vinylacetic acid, 2-pentenoic acid, 3-pentenoic acid, 5-hexenoic acid and 9-undecenoic acid; acid chlorides or chloroformates such as acrylic acid chloride, sorbic acid chloride, allyl alcohol chloroformate, isopropenylphenol chloroformate and hydroxystyrene chloroformate; and phenols having an unsaturated group such as isopropenylphenol, hydroxystyrene, hydroxyphenylmaleimide, hydroxybenzoic acid allyl ester and hydroxybenzoic acid methyl allyl ester. Among them, phenol and p-t-butylphenol are preferred.

The polycarbonate resin (A) to be used in the present embodiment may have a branch structure, and for obtaining such an aromatic polycarbonate resin having a branch structure, polyhydroxy compounds such as phloroglucin, 2,6-dimethyl-2,4,6-tris(4-hydroxyphenyl)-3-heptene, 4,6-dimethyl-2,4,6-tris(4-hydroxyphenyl)-2-heptene, 1,3,5-tris(2-hydroxyphenyl)benzole, 1,1,1-tris(4-hydroxyphenyl)ethane, 2,6-bis(2-hydroxy-5-methylbenzyl)-4-methylphenol and α,α',α"-tris(4-hydroxyphenyl)-1,3,5-triisopropylbenzene, and 3,3-bis(4-hydroxyaryl)oxyindole (also known as 1,3-bisphenol), 5-chloro-1,3-bisphenol, 5,7-dichloro-1,3-bisphenol, 5-bromo-1,3-bisphenol, etc. may be used.

The viscosity-average molecular weight of the polycarbonate resin (A) to be used in the present embodiment is preferably 10,000 or more in maintaining the mechanical strength and preferably 30,000 or less from the viewpoint of moldability, but more preferably 12,000 or more and 28,000 or less. By setting the viscosity-average molecular weight within the above-described range, the thermoplastic resin becomes excellent in mechanical strength and moldability.

In this regard, the viscosity-average molecular weight (Mv) is obtained as follows: the viscosity of a dichloromethane solution of the polycarbonate resin (A) (0.5 g/deciliter) at 25°C is measured by an Ubbelohde capillary viscometer; the limiting viscosity [η:deciliter/g] is obtained with a Huggins constant of 0.45; and calculation is carried out based on the below-described formula.

$$\eta = 1.23 \times 10^{-4} \times Mv^{0.83}$$

The method for producing the polycarbonate resin (A) to be used in the present embodiment is not particularly limited, and conventionally known methods can be applied thereto. For example, the polycarbonate resin (A) can be obtained by reacting the aromatic dihydroxy compound with a carbonate precursor according to an interfacial polymerization method or melt polymerization method.

The polyester resin (B) to be used in the present embodiment contains dicarboxylic acid units and diol units, and 20 to 60 mol% of all the diol units constituting the polyester resin (B) are diol units having a cyclic acetal skeleton. The diol units having a cyclic acetal skeleton are preferably units derived from a compound represented by general formula (3) or (4) below. Further, the polyester resin (B) may contain both the unit derived from the compound represented by general formula (3) below and the unit derived from the compound represented by general formula (4) below as the diol units having a cyclic acetal skeleton.

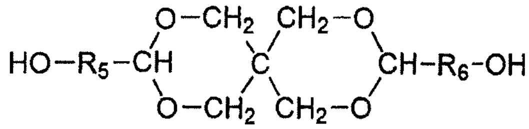 (3)

(In the formula, $R_5$ and $R_6$ each independently represent a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.)

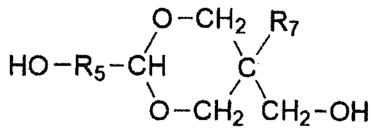 (4)

(In the formula: $R_5$ is as defined with respect to formula (3) above; and $R_7$ represents a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.)

As the compound of general formula (3) or (4), 3,9-bis(1,1-dimethyl-2-hydroxyethyl)-2,4,8,10-tetraoxaspiro[5.5]undecane or 5-methylol-5-ethyl-2-(1,1-dimethyl-2-hydroxyethyl)-1,3-dioxane is particularly preferred, and 3,9-bis(1,1-dimethyl-2-hydroxyethyl)-2,4,8,10-tetraoxaspiro[5.5]undecane is most preferred.

Further, diol units other than the diol units having a cyclic acetal skeleton are not particularly limited, and examples thereof include: aliphatic diols such as ethylene glycol, trimethylene glycol, 1,4-butanediol, 1,5-pentanediol, 1,6-hexanediol, diethylene glycol, propylene glycol and neopentylglycol; polyether diols such as polyethylene glycol, polypropylene glycol and polybutylene glycol; alicyclic diols such as 1,3 -cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornanedimethanol, tricyclodecanedimethanol and pentacyclododecanedimethanol; bisphenols such as 4,4'-(1-methylethylidene)bisphenol, methylene bisphenol (also known as bisphenol F), 4,4'-cyclohexylidene bisphenol (also known as bisphenol Z) and 4,4'-sulfonylbisphenol (also known as bisphenol S); alkylene oxide adducts of the above-described bisphenols; aromatic dihydroxy compounds such as hydroquinone, resorcin, 4,4'-dihydroxybiphenyl, 4,4'-dihydroxydiphenyl ether and 4,4'-dihydroxydiphenyl benzophenone; and alkylene oxide adducts of the above-described aromatic dihydroxy compounds. From the viewpoint of mechanical performance, economic efficiency, etc. of the thermoplastic resin composition, ethylene glycol, diethylene glycol, trimethylene glycol, 1,4-butanediol and 1,4-cyclohexanedimethanol are preferred, and ethylene glycol is particularly preferred. The diol units listed above may be used solely or in combination.

Further, the dicarboxylic acid units of the polyester resin (B) to be used in the present embodiment are not particularly limited, and examples thereof include: aliphatic dicarboxylic acids such as succinic acid, glutaric acid, adipic acid, pimelic acid, suberic acid, azelaic acid, sebacic acid, dodecanedicarboxylic acid, cyclohexanedicarboxylic acid, decanedicarboxylic acid, norbornanedicarboxylic acid, tricyclodecanedicarboxylic acid and pentacyclododecanedicarboxylic acid; and aromatic dicarboxylic acids such as terephthalic acid, isophthalic acid, phthalic acid, 2-methylterephthalic acid, 1,4-naphthalenedicarboxylic acid, 1,5-naphthalenedicarboxylic acid, 2,6-naphthalenedicarboxylic acid, 2,7-naphthalenedicarboxylic acid, biphenyldicarboxylic acid and tetralin dicarboxylic acid. From the viewpoint of mechanical performance and heat resistance of the thermoplastic resin composition, aromatic dicarboxylic acids such as terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid are preferred, and terephthalic acid, 2,6-naphthalenedicarboxylic acid and isophthalic acid are particularly preferred. Among them, from the viewpoint of economic efficiency, terephthalic acid is most preferred. The dicarboxylic acids listed above may be used solely or in combination.

The polyester resin (B) to be used in the present embodiment has the diol units having a cyclic acetal skeleton at a ratio of 20 to 60 mol%, preferably 25 to 55 mol%, and particularly preferably 30 to 50 mol% relative to all the diol units contained in the resin. When the ratio of the diol units having a cyclic acetal skeleton is less than 20 mol%, the improvement of transparency and heat resistance of the thermoplastic resin composition is insufficient, and when the ratio is more than 60 mol%, the improvement of transparency and mechanical strength is insufficient. The thermoplastic resin composition obtained by using the aforementioned polyester resin (B) is particularly excellent in transparency, heat resistance, chemical resistance, mechanical strength and molding processability.

Usually, the ratio of aromatic dicarboxylic acid units in all the dicarboxylic acid units contained in the polyester resin (B) to be used in the present embodiment is preferably 70 mol% or more, more preferably 80 mol% or more,

particularly preferably 90 mol% or more, and most preferably 100 mol%. When the ratio of the aromatic dicarboxylic acid units in the dicarboxylic acid units contained in the polyester resin (B) is set within the above-described range, the thermoplastic resin composition becomes more excellent in heat resistance, chemical resistance and mechanical strength.

In the polyester resin (B) in which the ratio of the aromatic dicarboxylic acid units in the dicarboxylic acid units is 70 mol% or more, when terephthalic acid units are contained in the aromatic dicarboxylic acid units, the ratio of the terephthalic acid units in the aromatic dicarboxylic acid units is preferably 20 to 100 mol%, more preferably 80 to 100 mol%, and particularly preferably 100 mol% from the viewpoint of economic efficiency. Further, when 2,6-naphthalenedicarboxylic acid units are contained in the aromatic dicarboxylic acid units, the ratio of the 2,6-naphthalenedicarboxylic acid units in the aromatic dicarboxylic acid units is preferably 20 to 100 mol%, more preferably 80 to 100 mol%, and particularly preferably 100 mol% from the viewpoint of chemical resistance and surface hardness.

The method for producing the polyester resin (B) to be used in the present embodiment is not particularly limited, and conventionally known methods can be applied thereto. Examples thereof include a melt polymerization method such as a transesterification method and a direct esterification method and a solution polymerization method.

The polyester resin (B) to be used in the present embodiment contains 3 to 25 ppm of titanium atoms. The amount of the titanium atoms in the polyester resin (B) is preferably 5 to 20 ppm, and more preferably 7 to 15 ppm. When the polyester resin (B) contains the titanium atoms in an amount within the above-described range, the polyester resin (B) is excellent in moldability, mechanical strength and thermal stability. When the amount of the titanium atoms is less than 3 ppm, the trouble of closure of the piping of the production apparatus may be caused by sublimation of the diol having a cyclic acetal skeleton during the production, or moldability and mechanical strength of the polyester resin (B) may be deteriorated by decomposition of the diol having a cyclic acetal skeleton. Meanwhile, when the amount is more than 25 ppm, thermal stability of the polyester resin (B) is deteriorated, resulting in a significantly yellowed resin.

The titanium atoms in the polyester resin (B) are preferably derived from a titanate compound. Examples of the titanate compound include tetra-n-butyl titanate, tetra-n-butyl titanate dimer, tetra-n-butyl titanate trimer, tetra-n-butyl titanate tetramer, tetra-t-butyl titanate, tetra-n-propyl titanate, tetraisopropyl titanate, tetraphenyl titanate, tetracyclohexyl titanate and tetrabenzyl titanate. Among them, tetra-n-butyl titanate is particularly preferred.

The aforementioned titanate compound is preferably added as a catalyst at the time of the production of the polyester resin (B). The titanate compound is added at the time of the production of the polyester resin (B) in a manner such that the polyester resin (B) at the completion of polycondensation contains titanium atoms in an amount within the aforementioned range particularly in consideration of the loss due to entrainment (scattering) during polycondensation.

The polyester resin (B) to be used in the present embodiment contains 20 to 150 ppm of phosphorus atoms. The amount of the phosphorus atoms in the polyester resin (B) is preferably 22 to 120 ppm, more preferably 24 to 90 ppm, even more preferably 26 to 70 ppm, and particularly preferably 28 to 50 ppm. When the polyester resin (B) contains the phosphorus atoms in an amount within the above-described range, the polyester resin (B) is excellent in color tone, thermal stability, moldability and mechanical strength. When the amount of the phosphorus atoms is less than 20 ppm, the polyester resin (B) has inferior thermal stability, and a significantly yellowish resin is produced, and a product is significantly colored at the time of molding. Meanwhile, when the amount is more than 150 ppm, gelation occurs at the time of the production of the polyester resin (B), and the moldability and mechanical strength are inferior. In order to impart preferred characteristics as those described herein to the thermoplastic resin composition, preferably, not the polycarbonate resin (A), but the polyester resin (B) contains the phosphorus atoms in an amount within the above-described range.

The phosphorus atoms in the polyester resin (B) are preferably derived from a monophosphate compound and/or a monophosphite compound. Examples of the monophosphate compound include phosphates such as methyl phosphate, ethyl phosphate, butyl phosphate, phenyl phosphate, dimethyl phosphate, diethyl phosphate, dibutyl phosphate, diphenyl phosphate, trimethyl phosphate, triethyl phosphate, tributyl phosphate and triphenyl phosphate. Examples of the monophosphite compound include methyl phosphite, ethyl phosphite, butyl phosphite, phenyl phosphite, dimethyl phosphite, diethyl phosphite, dibutyl phosphite, diphenyl phosphite, trimethyl phosphite, triethyl phosphite, tributyl phosphite and triphenyl phosphite. Among them, trimethyl phosphate and triethyl phosphate are particularly preferred.

When the phosphorus atoms contained in the polyester resin (B) to be used in the present embodiment are derived from a compound other than the monophosphate compound and/or the monophosphite compound (for example, when derived from a condensed phosphate, and more specifically, when derived from 1,3-phenylenebis(dixylenylphosphate)), there is a case where sufficient molding stability cannot be obtained because, for example, bubbles are generated when molding the thermoplastic resin composition.

The aforementioned monophosphate compound and/or the monophosphite compound is preferably added as an additive at the time of the polymerization of the polyester resin (B). The monophosphate compound and/or the monophosphite compound is added at the time of the polymerization of the polyester resin (B) in a manner such that the polyester resin (B) at the completion of polycondensation contains phosphorus atoms in an amount within the

aforementioned range particularly in consideration of the loss due to entrainment during polycondensation. The wording "at the time of the polymerization of the polyester resin" as used herein refers to the period from prior to feeding of raw materials before esterification and/or transesterification reaction to the completion of the polycondensation reaction and it is not particularly limited. Examples thereof include the time between when the esterification and/or transesterification reaction is completed and when the polycondensation reaction is initiated.

When the aforementioned monophosphate compound and/or the monophosphite compound is added to the polyester resin (B) after the completion of the polymerization in a manner such that the amount of the phosphorus atoms becomes a predetermined amount and it is melt-kneaded using a single or twin screw extruder or the like, there is a case where sufficient molding stability cannot be obtained because, for example, bubbles are generated when molding the thermoplastic resin composition.

The weight ratio between the phosphorus atoms and the titanium atoms in the polyester resin (B) to be used in the present embodiment (P/Ti) is 2.5 to 20.0. In this regard, the amount of the phosphorus atoms in P/Ti means the amount of phosphorus atoms derived from the monophosphate and/or monophosphite. P/Ti is preferably 2.5 to 15.0, more preferably 3.0 to 15.0, and particularly preferably 3.5 to 10.0. When P/Ti is within the above-described range, the polyester resin (B) is excellent in color tone, thermal stability, moldability and mechanical strength. In addition, excellent thermal stability is obtained when molding the thermoplastic resin composition containing the polycarbonate resin (A) and the polyester resin (B). When P/Ti is less than 2.5, the polyester resin (B) has inferior color tone and thermal stability. In addition, when molding the thermoplastic resin composition containing the polycarbonate resin (A) and the polyester resin (B), thermal stability is inferior. As a result, abnormal increase in the molecular weight, poor appearance due to bubbles, etc. occur at the time of molding of a thermoplastic resin. Further, conditions at the time of molding of the thermoplastic resin composition are restricted, for example, in terms of the temperature and the residence time. When P/Ti is more than 20.0, gelation may occur at the time of the production of the polyester resin (B), and the moldability and mechanical strength of the polyester resin (B) may be inferior.

The polyester resin (B) to be used in the present embodiment may be produced using a publicly-known catalyst in addition to the above-described titanate compound. Examples of the publicly-known catalyst include fatty acid salts, carbonates, hydroxides, chlorides and oxides of metallic magnesium, sodium, alkoxide of magnesium, zinc, lead, cerium, cadmium, manganese, cobalt, lithium, sodium, potassium, calcium, nickel, magnesium, vanadium, aluminium, tin, germanium, antimony and the like. These substances may be used solely or two or more of them may be used in combination.

The polyester resin (B) to be used in the present embodiment may be produced using a publicly-known additive in addition to the above-described monophosphate compound and/or the monophosphite compound. Examples of the publicly-known additive include an etherification prevention agent, various stabilizers such as a heat stabilizer, and a polymerization modifier. Examples of the etherification prevention agent include amine compounds. In addition, a light stabilizer, an antistatic agent, a lubricant, an antioxidant, a mold release agent, etc. may also be added. Further, as a basic compound, a carbonate, hydroxide, carboxylate, oxide, chloride or alkoxide of an alkali metal such as lithium, sodium and potassium may be added. As the basic compound, potassium acetate, sodium acetate and lithium acetate are particularly preferred.

The melt viscosity of the polyester resin (B) to be used in the present embodiment is preferably in the range of from 300 to 5000 Pa·s, and more preferably in the range of from 500 to 3000 Pa·s when performing the measurement at a measurement temperature of 240°C and a shear rate of 100 $s^{-1}$. When the melt viscosity is within the above-described range, the polycarbonate resin (A) can be mixed well at the time of melt-kneading, and the thermoplastic resin composition having excellent transparency, mechanical strength and moldability can be obtained.

The molecular weight distribution of the polyester resin (B) to be used in the present embodiment is preferably 2.5 to 12.0, more preferably 2.5 to 8.0, and even more preferably 2.5 to 5.0. When the molecular weight distribution is within the above-described range, the polyester resin (B) has excellent moldability and mechanical strength, and the thermoplastic resin composition has excellent moldability and mechanical strength. In this regard, the molecular weight distribution refers to the ratio of the weight average molecular weight (Mw) to the number average molecular weight (Mn) (Mw/Mn).

The thermoplastic resin composition of the present embodiment is obtained by mixing the polycarbonate resin (A) with the polyester resin (B) according to a conventionally known method. For example, these resins are dry-blended using a tumbler, a V-type blender, a Henschel mixer or the like to obtain a mixture, and it is melt-kneaded once or more using a single screw extruder, a twin screw extruder, a kneader or the like. At the time of the first melt-kneading with such a molding machine, the mixture may be directly molded into a sheet, a film, a foam, a hollow container or the like.

At the time of melt-kneading, the mixture is preferably dried in advance in a manner such that both the polycarbonate resin (A) and the polyester resin (B) have a moisture content of 1000 ppm or less, preferably 500 ppm or less, and more preferably 300 ppm or less. When the moisture content is within the above-described range, it is possible to prevent deterioration of the polycarbonate resin (A) and the polyester resin (B) at the time of melt-kneading.

Regarding the thermoplastic resin composition of the present embodiment, for example, when melt-kneading using a single screw extruder equipped with a T-die (manufactured by Research Laboratory of Plastics Technology Co.,

Ltd., 32 mmφ, L/D: 32, full flight screw) under the following conditions: cylinder temperature C1: 220°C, C2 and C3: 250°C, C4 to T-die: 270°C, and screw rotation speed: 20 rpm, the rate of change of the number-average molecular weight (Mn), which is calculated from the molecular weights of the polycarbonate resin (A) and the polyester resin (B) before melt-kneading and the molecular weight of the thermoplastic resin composition after melt-kneading according to the below-described formula, is preferably -20 to 20%, and more preferably -15 to 15%. Further, the rate of change of the weight-average molecular weight (Mw) is preferably -25 to 25%, and more preferably -20 to 20%. When the rate of change of the molecular weight is within the above-described range, a molded body has good outer appearance and mechanical strength.

Molecular weight before melt-kneading (Mn, Mw) = {molecular weight of polycarbonate resin (A) × ratio of polycarbonate resin (A)} + {molecular weight of polyester resin (B) × ratio of polyester resin (B)}

Rate of change of Mn (%) = {(Mn of thermoplastic resin composition - Mn before melt-kneading)/Mn before melt-kneading} × 100

Rate of change of Mw (%) = [(Mw of thermoplastic resin composition - Mw before melt-kneading)/Mw before melt-kneading] × 100

Note that in the above-described formula, the "ratio of polycarbonate resin (A)" means the weight ratio of the polycarbonate resin (A) to the total weight of the polycarbonate resin (A) and the polyester resin (B). Similarly, the "ratio of polyester resin (B)" means the weight ratio of the polyester resin (B) to the total weight of the polycarbonate resin (A) and the polyester resin (B).

In addition to the polycarbonate resin (A) and the polyester resin (B), the thermoplastic resin composition of the present embodiment may contain other resins and various types of additives without inhibiting the purpose of the present invention. These substances may be added solely, or two or more types of these may be added in combination.

Examples of the aforementioned other resins include: polyester resins such as polyethylene terephthalate, polybutylene terephthalate, polyethylene naphthalate, isophthalic acid-modified polyethylene terephthalate, 1,4-cyclohexanedimethanol-modified polyethylene terephthalate and polyarylate; polycarbonate resins; styrene-based resins such as acrylonitrile-styrene copolymer, acrylonitrile-butadiene-styrene copolymer and polystyrene; polyolefin resins such as polyethylene and polypropylene; vinyl chloride resin; polyamide resin; polyimide resin; polyetherimide resin; polyurethane resin; polyphenylene ether resin; acrylic resin; phenol resin and epoxy resin.

Further, examples of the aforementioned various types of additives include an antistatic agent, a flame retardant, a lubricant, an antioxidant, a light stabilizer, an ultraviolet absorber, a mold release agent, a pigment and an inorganic filler.

When the thermoplastic resin composition of the present embodiment is molded, conventionally known molding methods can be used without particular limitation, and examples thereof include injection molding, in-mold lamination molding, extrusion molding, profile extrusion molding, calender molding, extrusion foam molding, extrusion blow molding, injection blow molding and compression molding. These methods may be applied to either an embodiment for a single layer or an embodiment for a multilayer.

The thermoplastic resin composition of the present embodiment has small restriction for molding conditions (e.g., temperature, residence time and molding method) at the time of molding according to the aforementioned molding method, and the composition can be molded under a wide range of molding conditions. For example, in the case of injection molding, the melt viscosity can be reduced by increasing the molding temperature, and it is possible to obtain a thinner molded piece, a large-sized molded piece and a molded piece having good transferability. In general, a thinner or large-sized molded piece can also be obtained by increasing the injection speed. However, since the resin temperature is increased by shear heat which is generated when a resin is passed through the gate of the mold at a high speed, molding defects are easily caused by a resin having poor thermal stability. Further, when a molded piece is significantly small for the size of a molding machine, the residence time is increased, and for this reason, small restriction for the residence time is significantly advantageous.

In the case of extrusion molding, the melt viscosity can be reduced by increasing the molding temperature, and it is possible to increase the discharge rate, i.e., to improve productivity. Further, when the size of a molding apparatus is increased, shear heat generated by screw rotation is increased. As a result, the resin temperature tends to be higher, and molding defects are easily caused by a resin having poor thermal stability.

In the case of multilayer extrusion molding, generation of poor outer appearance such as flow marks can be

suppressed by setting the same temperature and viscosity for respective resins. In this regard, it is significantly advantageous that a wide range of temperature conditions can be employed.

The thermoplastic resin composition of the present embodiment can be applied to, for example, optical films such as phase difference films; interior parts for automobiles such as center consoles; light diffusion plates and light-guiding plates of liquid crystal displays; and various displays, taking advantage of its transparency, heat resistance, mechanical strength and molding processability. Moreover, the thermoplastic resin composition can also be used in the dental field, and it can be used as a material for temporary coating crowns, denture bases, artificial teeth, orthodontic devices, etc.

The total light transmittance of the injection molded body of the thermoplastic resin composition of the present embodiment having a thickness of 3.2 mm is preferably 87% or more, more preferably 88% or more, and particularly preferably 89% or more from the viewpoint of transparency. Meanwhile, the haze value is preferably 4% or less, more preferably 3% or less, even more preferably 2% or less, and particularly preferably 1% or less.

The total light transmittance of the extrusion molded body of the thermoplastic resin composition of the present embodiment having a thickness of 500 μm is preferably 87% or more, more preferably 88% or more, and particularly preferably 89% or more from the viewpoint of transparency. Meanwhile, the haze value is preferably 4% or less, more preferably 3% or less, even more preferably 2% or less, and particularly preferably 1% or less.

The glass transition temperature of the thermoplastic resin composition of the present embodiment measured by a differential scanning calorimeter is preferably 90 to 150°C, more preferably 105 to 145°C, and particularly preferably 120 to 140°C. When the glass transition temperature of the thermoplastic resin composition is within the above-described range, it is particularly excellent in heat resistance and molding processability.

The impact strength of the injection molded body of the thermoplastic resin composition of the present embodiment having a thickness of 3.2 mm in the notched Izod impact test is preferably 30 J/m or more, more preferably 50 J/m or more, and particularly preferably 100 J/m or more from the viewpoint of impact resistance.

When the melt viscosity of the thermoplastic resin composition of the present embodiment in the measurement at 240°C and at a shear rate of 100 $s^{-1}$ is preferably in the range of 300 to 5000 Pa·s, and more preferably in the range of 500 to 2000 Pa·s, the thermoplastic resin composition is excellent in molding processability, in particular, extrusion molding processability and foam molding processability. Further, when the melt viscosity of the thermoplastic resin composition in the measurement at 240°C and at a shear rate of 100 $s^{-1}$ is preferably in the range of 100 to 3000 Pa·s, and more preferably in the range of 150 to 2000 Pa·s, the thermoplastic resin composition is excellent in molding processability, in particular, injection molding processability. Moreover, in the case of a molded body obtained from the thermoplastic resin composition according to the embodiment, not only good formativeness and deep drawability can be obtained at the time of vacuum pressure molding, but also good secondary workability for cold bending, drilling, punching, etc. can be obtained.

## EXAMPLES

Hereinafter, the present invention will be more specifically described by way of examples. However, the scope of the present invention is not limited by these examples.

Raw materials used in the Examples and Comparative Examples are described below:

[Polycarbonate resin]

(A-1) trade name: Iupilon E-2000 (Mitsubishi Engineering-Plastics Corporation)
(A-2) trade name: Iupilon S-3000 (Mitsubishi Engineering-Plastics Corporation)
(A-3) trade name: Iupilon HL-8000 (Mitsubishi Engineering-Plastics Corporation)

Note that each of these polycarbonate resins is a polycarbonate of bisphenol A.

[Production of polyester resins (B-1) to (B-4)]

In a 150 liter polyester resin production apparatus equipped with a packed column type rectifier, a partial condenser, a total condenser, a cold trap, a stirrer, a heating equipment and a nitrogen introducing tube, terephthalic acid and ethylene glycol in the amounts described in Table 1 were fed, and an esterification reaction was performed according to the common method. To the obtained ester, ethylene glycol for depolymerization and germanium dioxide in the amounts described in Table 1 were added, and a depolymerization was performed at 225°C under a nitrogen gas stream. The reaction was performed for 3 hours while water produced was distilled away, and after that, ethylene glycol

was distilled away at 215°C at 13.3 kPa. To the obtained ester, tetra-n-butyl titanate, potassium acetate, triethyl phosphate and SPG in the amounts described in Table 1 were added, and a reaction was performed at 225°C at 13.3 kPa for 3 hours. The obtained ester was subjected to temperature rising and pressure reduction, and finally a polycondensation reaction was performed at 270°C under high vacuum (130 Pa or less). When the melt viscosity reached a predetermined value, the reaction was terminated, thereby obtaining polyester resins (B-1) to (B-4).

Note that the meanings of the abbreviations in the table are as follows:

- PTA: terephthalic acid
- SPG: 3,9-bis(1,1-dimethyl-2-hydroxyethyl)-2,4,8,10-tetraoxaspiro[5.5]undecane
- EG: ethylene glycol
- $GeO_2$: germanium dioxide
- TBT: tetra-n-butyl titanate
- AcOK: potassium acetate
- TEP: triethyl phosphate

Table 1

| | Unit | Production Example 1 | Production Example 2 | Production Example 3 | Production Example 4 |
|---|---|---|---|---|---|
| Materials for polymerization of polyester resin (B) | | | | | |
| Name of resin | | B-1 | B-2 | B-3 | B-4 |
| PTA | g | 37634 | 33093 | 33093 | 33093 |
| EG | g | 15888 | 13971 | 13971 | 13971 |
| EG for depolymerization | g | 15045 | 13229 | 13229 | 13229 |
| $GeO_2$ | g | 5.924 | 5.209 | 5.209 | 5.209 |
| TBT | g | 3.855 | 3.390 | 3.390 | 3.390 |
| Ti(*1) | ppm | 9.0 | 8.0 | 8.0 | 8.0 |
| AcOK | g | 4.447 | 3.910 | 3.910 | 3.910 |
| TEP | g | 26.821 | 23.585 | 27.213 | 56.604 |
| P(*1) | ppm | 76.0 | 66.8 | 77.1 | 160.4 |
| SPG | g | 21375 | 27891 | 27891 | 27891 |
| Evaluation of polyester resin (B) | | | | | |
| SPG | mol% | 30 | 45 | 45 | 45 |
| Tg | °C | 100 | 109 | 109 | 109 |
| Mn | | 13800 | 13500 | 14000 | 14100 |
| Mw | | 50500 | 49100 | 52100 | 54100 |
| Mw/Mn | | 3.66 | 3.64 | 3.72 | 3.84 |
| Melt viscosity | Pa·s | 1400 | 1400 | 1600 | 1800 |
| Ti | ppm | 8.9 | 7.1 | 7.9 | 7.0 |
| P | ppm | 24.1 | 21.9 | 31.5 | 41.0 |
| P/Ti | | 2.7 | 3.1 | 4.0 | 5.9 |
| (*1) Concentration in resin after polymerization calculated from feed amount without reference to loss due to entrainment | | | | | |

[Production Examples 5-8]

In a 150 liter polyester resin production apparatus equipped with a packed column type rectifier, a partial

condenser, a total condenser, a cold trap, a stirrer, a heating equipment and a nitrogen introducing tube, dimethyl terephthalate, dimethyl 2,6-naphthalenedicarboxylate, EG, SPG, TBT and AcOK in the amounts described in Table 2 were fed, and a transesterification reaction was performed according to the common method. To the obtained ester, $GeO_2$ and TEP in the amounts described in Table 2 were added, and then the mixture was subjected to temperature rising and pressure reduction, and finally a polycondensation reaction was performed at 270°C under high vacuum (130 Pa or less). When the melt viscosity reached a predetermined value, the reaction was terminated, thereby obtaining polyester resins (B-5) to (B-8).

Note that the meanings of the abbreviations in the table are as described below (the same abbreviations as those in Table 1 are as defined above, and the same applies to Tables 3-5).

- DMT: dimethyl terephthalate
- NDCM: dimethyl 2,6-naphthalenedicarboxylate

Table 2

| | Unit | Production Example 5 | Production Example 6 | Production Example 7 | Production Example 8 |
|---|---|---|---|---|---|
| Materials for polymerization of polyester resin (B) | | | | | |
| Name of resin | | B-5 | B-6 | B-7 | B-8 |
| DMT | g | 19430 | 19430 | 17267 | 0 |
| NDCM | g | 24439 | 24439 | 21718 | 40340 |
| EG | g | 18507 | 18507 | 14791 | 13737 |
| $GeO_2$ | g | 5.234 | 5.234 | 4.651 | 4.319 |
| TBT | g | 3.406 | 5.108 | 3.026 | 3.092 |
| Ti(*1) | ppm | 8.3 | 12.4 | 7.3 | 7.5 |
| AcOK | g | 3.928 | 3.928 | 3.491 | 3.242 |
| TEP | g | 36.453 | 36.453 | 32.394 | 30.085 |
| P(*1) | ppm | 106.9 | 106.9 | 95.0 | 88.2 |
| SPG | g | 18869 | 18869 | 24882 | 23108 |
| Evaluation of polyester resin (B) | | | | | |
| SPG | mol% | 30 | 30 | 45 | 45 |
| NDCM | mol% | 50 | 50 | 50 | 100 |
| Tg | °C | 118 | 119 | 126 | 138 |
| Mn | | 13700 | 14100 | 14500 | 13600 |
| Mw | | 44800 | 50300 | 45400 | 46800 |
| Mw/Mn | | 3.27 | 3.57 | 3.13 | 3.44 |
| Melt viscosity | Pa·s | 1900 | 2300 | 2200 | 2500 |
| Ti | ppm | 8.3 | 12.4 | 7.3 | 7.4 |
| P | ppm | 41.3 | 42.8 | 40.1 | 38.5 |
| P/Ti | | 5.0 | 3.5 | 5.5 | 5.2 |
| (*1) Concentration in resin after polymerization calculated from feed amount without reference to loss due to entrainment | | | | | |

[Production Examples 9-11]

Polyester resins (B-9) to (B-11) were obtained in a manner similar to that for the polyester resin (B-1), except that the amounts of polymerization materials used were as described in Table 3.

Table 3

| | | Production Example 9 | Production Example 10 | Production Example 11 |
|---|---|---|---|---|
| Materials for polymerization of polyester resin (B) | | | | |
| Name of resin | | B-9 | B-10 | B-11 |
| PTA | g | 33093 | 33093 | 33093 |
| EG | g | 13971 | 13971 | 13971 |
| EG for depolymerization | g | 13229 | 13229 | 13229 |
| $GeO_2$ | g | 5.209 | 5.209 | 5.209 |
| TBT | g | 2.170 | 3.390 | 3.390 |
| Ti(*1) | ppm | 5.1 | 8.0 | 8.0 |
| AcOK | g | 3.910 | 3.910 | 3.910 |
| TEP | g | 36.285 | 18.142 | 18.142 |
| P(*1) | ppm | 102.8 | 51.4 | 51.4 |
| SPG | g | 27891 | 27891 | 27891 |
| Evaluation of polyester resin (B) | | | | |
| SPG | mol% | 45 | 45 | 45 |
| Tg | °C | 109 | 110 | 109 |
| Mn | | 13600 | 17100 | 13700 |
| Mw | | 55700 | 61500 | 51800 |
| Mw/Mn | | 4.10 | 3.60 | 3.78 |
| Melt viscosity | Pa·s | 1800 | 2100 | 1600 |
| Ti | ppm | 5.0 | 7.7 | 7.8 |
| P | ppm | 73.2 | 17.9 | 14.1 |
| P/Ti | | 14.6 | 2.3 | 1.8 |
| (*1) Concentration in resin after polymerization calculated from feed amount without reference to loss due to entrainment | | | | |

[Production Example 12]

The polyester resin (B-10) (99.9 parts by weight) and PX-200 (0.1 parts by weight) manufactured by Daihachi Chemical Industry Co., Ltd., which is a condensed phosphate, were subjected to dry blending using a tumbler, and then the mixture was melt-kneaded using a twin screw extruder (TEM37BS manufactured by Toshiba Machine Co., Ltd.) at a cylinder temperature of 210 to 280°C, at a die temperature of 240 to 275°C and at a screw rotation speed of 100 rpm, thereby obtaining a pellet-type polyester resin (B-12).

This production examples is an example of combined use of a condensed phosphate and a monophosphate, and it is characterized in that the amount of phosphorus atoms derived from the monophosphate contained in the polyester resin obtained is smaller than the required amount.

Table 4

| | | Production Example 12 |
|---|---|---|
| Name of resin | | B-12 |
| Evaluation of polyester resin (B) | | |
| SPG | mol% | 45 |
| Tg | °C | 109 |

(continued)

| Evaluation of polyester resin (B) | | |
|---|---|---|
| Mn | | 16200 |
| Mw | | 59500 |
| Mw/Mn | | 3.67 |
| Melt viscosity | Pa·s | 1800 |
| Ti | ppm | 7.7 |
| P (derived from monophosphate) | ppm | 17.9 |
| P (total amount) | ppm | 118.0 |
| P/Ti (derived from monophosphate) | | 2.3 |
| P/Ti (total amount) | | 15.3 |

[Production Examples 13-16]

Polyester resins (B-13) to (B-16) were obtained in a manner similar to that for the polyester resin (B-1), except that the amounts of polymerization materials used were as described in Table 5.

Table 5

| | | Production Example 13 | Production Example 14 | Production Example 15 | Production Example 16 |
|---|---|---|---|---|---|
| Materials for polymerization of polyester resin (B) | | | | | |
| Name of resin | | B-13 | B-14 | B-15 | B-16 |
| PTA | g | 33093 | 33093 | 33093 | 33093 |
| EG | g | 13971 | 13971 | 13971 | 13971 |
| EG for depolymerization | g | 13229 | 13229 | 13229 | 13229 |
| $GeO_2$ | g | 5.209 | 5.209 | 5.209 | 5.209 |
| TBT | g | 13.560 | 1.356 | 3.390 | 3.390 |
| Ti(*1) | ppm | 31.8 | 3.2 | 8.0 | 8.0 |
| AcOK | g | 3.910 | 3.910 | 3.910 | 3.910 |
| TEP | g | 18.142 | 18.142 | 1.814 | 90.711 |
| P(*1) | ppm | 51.4 | 51.4 | 5.1 | 257.1 |
| SPG | g | 27891 | 27891 | 27891 | 27891 |
| Evaluation of polyester resin (B) | | | | | |
| SPG | mol% | 45 | 37 | 45 | 45 |
| Tg | °C | 109 | 103 | 109 | 109 |
| Mn | | 12600 | 8500 | 13200 | 7900 |
| Mw | | 48900 | 38500 | 50600 | 90000 |
| Mw/Mn | | 3.88 | 4.52 | 3.83 | 11.40 |
| Melt viscosity | Pa·s | 1100 | 700 | 1300 | 3100 |
| Ti | ppm | 28.1 | 2.5 | 7.7 | 7.7 |
| P | ppm | 22.3 | 21.1 | 4.5 | 184.6 |

(continued)

| Evaluation of polyester resin (B) | | | | | |
|---|---|---|---|---|---|
| P/Ti | | 0.8 | 8.4 | 0.6 | 24.0 |

In Production Example 13, the obtained pellet was significantly yellowed (YI value: 45), and it was impossible to obtain an evaluable resin.
In Production Example 14, since the piping of the apparatus was closed by the sublimated SPG during the production, it was impossible to obtain a desired vacuum degree. For this reason, it was impossible to develop polymerization to obtain a desired melt viscosity, and it was impossible to obtain an evaluable resin.
In Production Example 15, the obtained pellet was significantly yellowed (YI value: 68), and it was impossible to obtain an evaluable resin.
In Production Example 16, since gelation occurred during the production, Mw/Mn of resin was significantly large, and it was impossible to obtain an evaluable resin.
The methods for evaluating the polyester resins (B-1) to (B-16) are as described below.

(1) Resin composition

The composition of the polyester resin was calculated from the $^1$H-NMR measurement and the peak area ratio, wherein 20 mg of the polyester resin was dissolved in 1 g of deuterated chloroform. As a measurement apparatus, BRUKER AVANCE-500 III manufactured by BRUKER was used, and the measurement was carried out at 500 MHz.

(2) Glass transition temperature

DSC/TA-60WS manufactured by Shimadzu Corporation was used. About 10 mg of the polyester resin was put into an unsealed container made of aluminium, and heated to 280°C under a nitrogen gas stream (30 mL/min) at a temperature elevation rate of 20°C/min to be melted. The melted resin was rapidly cooled to obtain a measurement sample. The sample was subjected to the measurement under the same conditions to produce a DSC curve. A line was drawn at the middle between two baselines before and after transition in the DSC curve (the baseline of the glass state and the baseline of the molten state), and the temperature at the intersection point of the line and the DSC curve was regarded as the glass transition temperature.

(3) Molecular weight (number average molecular weight Mn, weight average molecular weight Mw, molecular weight distribution Mw/Mn)

2 mg of the polyester resin was dissolved in 20 g of chloroform to obtain a sample, and it was measured by gel permeation chromatography (GPC). After that, calibration was carried out based on a standard polystyrene to obtain Mn and Mw/Mn. For the GPC measurement, TOSOH 8020 manufactured by Tosoh Corporation, to which two columns of GMHHR-L and one column of TSK G5000HR manufactured by Tosoh Corporation were connected, was used and the column temperature was 40°C. As an eluent, chloroform was flowed at a flow rate of 1.0 ml/min, and as a detector, a UV detector was used.

(4) Melt viscosity

As a measurement apparatus, Capirograph 1C manufactured by Toyo Seiki Seisaku-sho, Ltd. was used, and the measurement was carried out under the following conditions: temperature: 240°C, preheating time: 6 min, nozzle diameter: 1 mm, nozzle length: 10 mm, and shear rate: 100 (1/sec).

(5) Concentrations of phosphorus atoms and titanium atoms

The concentrations of phosphorus atoms and titanium atoms in the polyester resin were measured using ICPE-9000 manufactured by Shimadzu Corporation. Unless otherwise stated, the concentration of phosphorus atoms in Tables 1-4 is the concentration of phosphorus atoms derived from the monophosphate (triethyl phosphate).
The results of evaluation of the polyester resins (B-1) to (B-13) according to the above-described methods are shown in Tables 1 to 4.

[Examples 1-12 and Comparative Examples 1-3]

Preparation of thermoplastic resin composition and extrusion-molded body

The polycarbonate resin (A) and the polyester resin (B) were subjected to dry blending using a tumbler at a ratio shown in Tables 5 to 8 below. After that, the mixture was supplied to a single screw extruder equipped with a T-die (manufactured by Research Laboratory of Plastics Technology Co., Ltd., 32 mmφ, L/D: 32, full flight screw) and extruded to be formed into a sheet-like shape under the below-described two types of conditions, thereby obtaining a sheet made of the thermoplastic resin composition having a thickness of 500 μm. Note that the polycarbonate resin (A) was subjected to dehumidifying and drying at 120°C for 8 hours before use, and the polyester resin (B) was subjected to vacuum drying at 80°C for 12 hours before use.

Conditions 1
cylinder temperature C1: 220°C, C2 and C3: 250°C, C4 to T-die: 250°C, screw rotation speed: 70 rpm, and pass time: about 60 seconds
Conditions 2
cylinder temperature C1: 220°C, C2 and C3: 250°C, C4 to T-die: 270°C, screw rotation speed: 20 rpm, and pass time: about 240 seconds

Note that in Conditions 2, the pass time was set on the assumption of the preparation of a wide sheet using a large-sized extruder.

[Evaluation methods]

(1) Glass transition temperature

Regarding the glass transition temperature of the thermoplastic resin composition, DSC/TA-60WS manufactured by Shimadzu Corporation was used. About 10 mg of a sample was put into an unsealed container made of aluminium, and heated to 280°C under a nitrogen gas stream (30 mL/min) at a temperature elevation rate of 20°C/min to be melted. The melted sample was rapidly cooled to obtain a measurement sample. The sample was subjected to the measurement under the same conditions to produce a DSC curve. A line was drawn at the middle between two baselines before and after transition in the DSC curve (the baseline of the glass state and the baseline of the molten state), and the temperature at the intersection point of the line and the DSC curve was regarded as the glass transition temperature.

(2) Molecular weight (number average molecular weight Mn, weight average molecular weight Mw, molecular weight distribution Mw/Mn)

2 mg of the thermoplastic resin composition was dissolved in 20 g of chloroform to obtain a sample, and it was measured by gel permeation chromatography (GPC). After that, calibration was carried out based on a standard polystyrene to obtain Mn and Mw/Mn. For the GPC measurement, TOSOH 8020 manufactured by Tosoh Corporation, to which two columns of GMHHR-L and one column of TSK G5000HR manufactured by Tosoh Corporation were connected, was used and the column temperature was 40°C. As an eluent, chloroform was flowed at a flow rate of 1.0 ml/min, and as a detector, a UV detector was used.

(3) Rate of change of molecular weight (rate of change of Mn, rate of change of Mw)

The rates of change were calculated based on the below-described formulae using Mn and Mw obtained by the measurement according to the above-described method.

Molecular weight before melt-kneading (Mn, Mw) = {molecular weight of polycarbonate resin (A) × ratio of polycarbonate resin (A)} + {molecular weight of polyester resin (B) × ratio of polyester resin (B)}

$$\text{Rate of change of Mn (\%)} = \{(\text{Mn of thermoplastic resin composition} - \text{Mn before melt-kneading})/\text{Mn before melt-kneading}\} \times 100$$

$$\text{Rate of change of Mw (\%)} = \{(\text{Mw of thermoplastic resin composition} - \text{Mw before melt-kneading})/\text{Mw before melt-kneading}\} \times 100$$

(4) Outer appearance

The outer appearance of the sheet (presence or absence of bubbles) was visually evaluated.

A: No poor appearance due to bubbles was visually confirmed.

B: Bubbles were visually confirmed in a part of the sheet.

C: Bubbles were visually confirmed in the entire sheet.

(5) Haze value

The haze value was measured according to JIS K7105 using a color difference/haze meter (model: COH-400) manufactured by Nippon Denshoku Industries Co., Ltd.

The evaluation results are shown in Tables 6 to 9.

Table 6

| | | Example 1 | Example 2 | Example 3 | Example 4 |
|---|---|---|---|---|---|
| Polycarbonate resin (A) | | A-1 | A-1 | A-1 | A-1 |
| Polyester resin (B) | | B-1 | B-2 | B-3 | B-4 |
| (A):(B) | Weight ratio | 50:50 | 50:50 | 50:50 | 50:50 |
| Evaluation of thermoplastic resin composition (Conditions 1) | | | | | |
| Tg | °C | 124 | 128 | 128 | 128 |
| Mn | | 15200 | 14900 | 15000 | 15100 |
| Mw | | 52000 | 51200 | 51000 | 52500 |
| Mw/Mn | | 3.42 | 3.44 | 3.4 | 3.48 |
| Rate of change of Mn | % | -3.8 | -4.8 | -5.7 | -5.3 |
| Rate of change of Mw | % | 0.9 | 0.7 | -2.6 | -1.6 |
| Outer appearance | | A | A | A | A |
| Haze value | %/500 μm | 1.9 | 2.0 | 1.8 | 1.8 |
| Evaluation of thermoplastic resin composition (Conditions 2) | | | | | |
| Tg | °C | 124 | 128 | 128 | 128 |
| Mn | | 16400 | 15600 | 15300 | 15100 |
| Mw | | 58000 | 54600 | 52500 | 52500 |
| Mw/Mn | | 3.54 | 3.5 | 3.43 | 3.48 |
| Rate of change of Mn | % | 3.8 | -0.3 | -3.8 | -5.3 |
| Rate of change of Mw | % | 12.5 | 7.4 | 0.3 | -1.6 |
| Outer appearance | | B | A | A | A |
| Haze value | %/500 μm | 5.3 | 2.3 | 2.1 | 2.0 |

Table 7

| | | Example 5 | Example 6 | Example 7 | Example 8 |
|---|---|---|---|---|---|
| Polycarbonate resin (A) | | A-1 | A-1 | A-1 | A-1 |
| Polyester resin (B) | | B-5 | B-6 | B-7 | B-8 |
| (A):(B) | Weight ratio | 50:50 | 50:50 | 50:50 | 50:50 |
| Evaluation of thermoplastic resin composition (Conditions 1) | | | | | |
| Tg | °C | 132 | 132 | 139 | 143 |
| Mn | | 15200 | 15100 | 15300 | 15100 |
| Mw | | 52300 | 51200 | 51500 | 53000 |
| Mw/Mn | | 3.44 | 3.39 | 3.37 | 3.51 |
| Rate of change of Mn | % | -3.5 | -5.3 | -5.3 | -3.8 |
| Rate of change of Mw | % | 7.4 | -0.5 | 5.1 | 6.6 |
| Outer appearance | | A | A | A | A |
| Haze value | %/500 μm | 2.5 | 1.1 | 1.9 | 1.8 |
| Evaluation of thermoplastic resin composition (Conditions 2) | | | | | |
| Tg | °C | 132 | 132 | 139 | 143 |
| Mn | | 15300 | 15200 | 15300 | 15200 |
| Mw | | 52600 | 51800 | 51700 | 53200 |
| Mw/Mn | | 3.44 | 3.41 | 3.38 | 3.5 |
| Rate of change of Mn | % | -2.9 | -4.7 | -5.3 | -3.2 |
| Rate of change of Mw | % | 8.0 | 0.7 | 5.5 | 7.0 |
| Outer appearance | | A | A | A | A |
| Haze value | %/500 μm | 2.0 | 1.9 | 2.6 | 2.8 |

Table 8

| | | Example 9 | Example 10 | Example 11 | Example 12 |
|---|---|---|---|---|---|
| Polycarbonate resin (A) | | A-1 | A-2 | A-1 | A-1 |
| Polyester resin (B) | | B-9 | B-3 | B-3 | B-3 |
| (A):(B) | Weight ratio | 50:50 | 50:50 | 80:20 | 80:20 |
| Evaluation of thermoplastic resin composition (Conditions 1) | | | | | |
| Tg | °C | 128 | 126 | 140 | 115 |
| Mn | | 15100 | 13000 | 15600 | 14800 |
| Mw | | 52300 | 39500 | 56200 | 52400 |
| Mw/Mn | | 3.46 | 3.04 | 3.6 | 3.54 |
| Rate of change of Mn | % | -3.8 | -8.5 | -8.5 | 0.3 |
| Rate of change of Mw | % | -3.4 | -14.1 | 7.0 | 0.4 |
| Outer appearance | | A | A | A | A |
| Haze value | %/500 μm | 2.0 | 3.1 | 1.9 | 1.8 |

(continued)

| Evaluation of thermoplastic resin composition (Conditions 2) | | | | | |
|---|---|---|---|---|---|
| Tg | °C | 128 | 126 | 140 | 115 |
| Mn | | 15100 | 13200 | 15600 | 14900 |
| Mw | | 52400 | 40300 | 56400 | 52700 |
| Mw/Mn | | 3.47 | 3.05 | 3.62 | 3.54 |
| Rate of change of Mn | % | -3.8 | -7.0 | -8.5 | 0.9 |
| Rate of change of Mw | % | -3.2 | -12.4 | 7.4 | 1.0 |
| Outer appearance | | A | A | A | A |
| Haze value | %/500 μm | 2.2 | 3.3 | 2.3 | 1.5 |

Table 9

| | | Comparative Example 1 | Comparative Example 2 | Comparative Example 3 |
|---|---|---|---|---|
| Polycarbonate resin (A) | | A-1 | A-1 | A-1 |
| Polyester resin (B) | | B-10 | B-11 | B-12 |
| (A):(B) | Weight ratio | 50:50 | 50:50 | 50:50 |
| Evaluation of thermoplastic resin composition (Conditions 1) | | | | |
| Tg | °C | 128 | 128 | 128 |
| Mn | | 16400 | 15300 | 15600 |
| Mw | | 64100 | 52400 | 54500 |
| Mw/Mn | | 3.91 | 3.42 | 3.49 |
| Rate of change of Mn | % | -6.0 | 8.9 | -8.2 |
| Rate of change of Mw | % | 12.4 | 0.4 | -2.8 |
| Outer appearance | | B | A | A |
| Haze value | %/500 μm | 2.5 | 1.5 | 2.1 |
| Evaluation of thermoplastic resin composition (Conditions 2) | | | | |
| Tg | °C | 128 | 128 | 128 |
| Mn | | 23400 | 19000 | 20500 |
| Mw | | 92100 | 72500 | 72100 |
| Mw/Mn | | 3.94 | 3.82 | 3.52 |
| Rate of change of Mn | % | 34.1 | 35.2 | 20.6 |
| Rate of change of Mw | % | 61.4 | 38.9 | 28.6 |
| Outer appearance | | C | C | C |
| Haze value | %/500 μm | 72.3 | 83.3 | 65.4 |

According to the results of Examples 1 to 12, it was found that the resin composition according to the embodiment can be stably molded without occurrence of poor outer appearance, etc. even when using a large-sized extruder with long residence time. Meanwhile, it was found that when the resin compositions of Comparative Examples 1 to 3 are molded with a large-sized extruder, the rate of change of the molecular weight before and after molding is large and poor outer appearance occurs.

[Examples 13 and 14 and Comparative Example 4]

(1) Preparation of thermoplastic resin composition and injection-molded body

The polycarbonate resin (A) and the polyester resin (B) were subjected to dry blending using a tumbler at a ratio shown in Table 10 below. After that, the mixture was supplied to a twin screw extruder (manufactured by Toyo Seiki Seisaku-sho, Ltd., 20 mmφ, L/D: 25) and extruded to be formed into a strand-like shape at a cylinder temperature of 230 to 240°C, at a die temperature of 240°C and at a screw rotation speed of 40 rpm, thereby obtaining a pellet-type thermoplastic resin composition. Note that the polycarbonate resin (A) was subjected to dehumidifying and drying at 120°C for 8 hours before use, and the polyester resin (B) was subjected to vacuum drying at 80°C for 12 hours before use.
The obtained pellet-type thermoplastic resin composition was supplied to a screw-type injection molding machine (manufactured by Sumitomo Heavy Industries, Ltd., screw diameter: 32 mm, clamping force: 9.8 kN), and a test piece having a thickness of 3.2 mm was obtained by molding under the below-described two types of conditions.

Conditions 1
cylinder temperature C1: 210°C, C2: 245°C, C3 and C4: 300°C, C5: 285°C, mold temperature: 80°C, and cycle time: 50 seconds
Conditions 2
cylinder temperature C1: 260°C, C2: 310°C, C3 and C4: 330°C, C5: 320°C, mold temperature: 90°C, and cycle time: 50 seconds

[Evaluation methods]

(1) Glass transition temperature

Regarding the glass transition temperature of the thermoplastic resin composition, DSC-60A manufactured by Shimadzu Corporation was used. About 4 mg of a sample was put into an unsealed container made of aluminium, and heated to 280°C under a nitrogen gas stream (50 mL/min) at a temperature elevation rate of 20°C/min to be melted. The melted sample was rapidly cooled to obtain a measurement sample. The sample was subjected to the measurement under the same conditions to produce a DSC curve. A line was drawn at the middle between two baselines before and after transition in the DSC curve (the baseline of the glass state and the baseline of the molten state), and the temperature at the intersection point of the line and the DSC curve was regarded as the glass transition temperature.

(2) Melt viscosity

Regarding the melt viscosity of the thermoplastic resin composition, as a measurement apparatus, Capirograph 1C manufactured by Toyo Seiki Seisaku-sho, Ltd. was used, and the measurement was carried out under the following conditions: temperature: 240°C, preheating time: 6 min, nozzle diameter: 1 mm, nozzle length: 10 mm, and shear rate: 100 (1/sec).

(3) YI

YI of the injection-molded body having a thickness of 3.2 mm was measured according to JIS K7105 using a color difference/haze meter (model: COH-400) manufactured by Nippon Denshoku Industries Co., Ltd.

(4) Outer appearance

The outer appearance of the injection-molded body having a thickness of 3.2 mm was visually evaluated.

A: No poor appearance due to bubbles was visually confirmed.
B: Bubbles and silver streaks were visually confirmed.

(5) Haze value

The haze value of the injection-molded body having a thickness of 3.2 mm was measured according to JIS K7105 using a color difference/haze meter (model: COH-400) manufactured by Nippon Denshoku Industries Co., Ltd.

Table 10

| | | Example 13 | Example 14 | Comparative Example 4 |
|---|---|---|---|---|
| Polycarbonate resin (A) | | A-3 | A-3 | A-3 |
| Polyester resin (B) | | B-1 | B-4 | B-10 |
| (A):(B) | | 90:10 | 90:10 | 90:10 |
| Evaluation of thermoplastic resin composition | | | | |
| Tg | °C | 135 | 135 | 136 |
| Melt viscosity | Pa·s | 400 | 410 | 395 |
| Evaluation of injection-molded body (Conditions 1) | | | | |
| YI | | 1.5 | 1.3 | 1.5 |
| Outer appearance | | A | A | A |
| Haze value | %/3.2 mm | 0.5 | 0.5 | 0.5 |
| Evaluation of injection-molded body (Conditions 2) | | | | |
| YI | | 2.2 | 2.0 | 4.4 |
| Outer appearance | | A | A | B |
| Haze value | %/3.2 nun | 0.5 | 0.5 | 5.1 |

According to Table 10, it was found that when the resin composition according to the embodiment is used, poor outer appearance does not occur even in the case of injection molding at higher temperature conditions (Conditions 2).

The thermoplastic resin composition according to the embodiment is excellent in transparency, heat resistance, chemical resistance, mechanical strength, molding processability, etc. and is also excellent in stability during use, and therefore, a molded body in the form of, for example, an injection-molded body, a foam, a film, a sheet or the like can be stably produced thereby. The obtained molded body can be widely utilized in various fields such as the field of electrical and electronic equipment including office automation apparatuses, information and communication devices and home electric apparatuses, the automotive field, the food field and the architecture field. In addition, the molded body can also be used in the dental field, and it can be used as a material for temporary coating crowns, denture bases, artificial teeth, orthodontic devices, etc.

## Claims

**1.** A thermoplastic resin composition, which comprises: a polycarbonate resin (A); and a polyester resin (B) which contains diol units having a cyclic acetal skeleton at a ratio of 20 to 60 mol% relative to all diol units constituting the polyester resin (B), and which satisfies (1) to (4) below:

(1) the polyester resin (B) contains 20 to 150 ppm of phosphorus atoms derived from a monophosphate and/or a monophosphite;
(2) the polyester resin (B) contains 3 to 25 ppm of titanium atoms;
(3) the weight ratio between the phosphorus atoms and the titanium atoms in the polyester resin (B) (P/Ti) is 2.5 to 20.0; and
(4) the weight ratio of the polycarbonate resin (A) to the total weight of the polycarbonate resin (A) and the polyester resin (B) is 2 to 99.5 wt%.

**2.** The thermoplastic resin composition according to claim 1, wherein the polycarbonate resin (A) is a polycarbonate resin containing repeat units represented by general formula (1) and/or general formula (2):

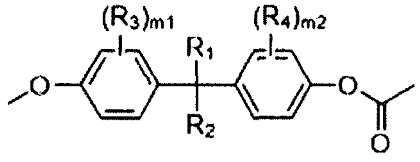

(1)

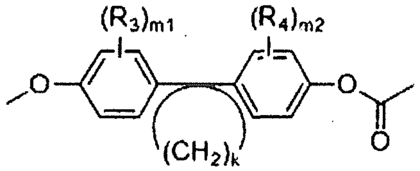

(2)

wherein in general formulae (1) and (2) above: $R_1$ and $R_2$ are each independently selected from a hydrogen atom, a non-cyclic hydrocarbon group having 1 to 10 carbon atoms, an aryl group having 6 to 18 carbon atoms and an alicyclic hydrocarbon group having 5 to 10 carbon atoms; $R_3$ and $R_4$ are each independently selected from a halogen atom, an aliphatic hydrocarbon group having 1 to 10 carbon atoms, an aryl group having 6 to 18 carbon atoms, an oxyalkyl group having 1 to 10 carbon atoms and an oxyaryl group having 6 to 18 carbon atoms; m1 and m2 are each independently 0 to 4; and k is 4 or 5.

**3.** The thermoplastic resin composition according to claim 1, wherein the polycarbonate resin (A) is a polycarbonate of bisphenol A.

**4.** The thermoplastic resin composition according to any one of claims 1 to 3, wherein the diol units having a cyclic acetal skeleton are derived from at least one diol selected from:

a diol represented by general formula (3):

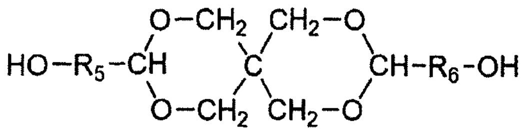

(3)

wherein $R_5$ and $R_6$ each independently represent a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms; and
a diol represented by general formula (4):

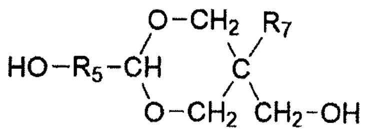

(4)

wherein: $R_5$ is as defined with respect to formula (3); and $R_7$ represents a hydrocarbon group selected from the group consisting of an aliphatic hydrocarbon group having 1 to 10 carbon atoms, an alicyclic hydrocarbon group having 3 to 10 carbon atoms and an aromatic hydrocarbon group having 6 to 10 carbon atoms.

**5.** The thermoplastic resin composition according to any one of claims 1 to 3, wherein the diol units having a cyclic acetal skeleton are diol units derived from 3,9-bis(1,1-dimethyl-2-hydroxyethyl)-2,4,8,10-tetraoxaspiro[5.5]undecane or diol units derived from 5-methylol-5-ethyl-2-(1,1-dimethyl-2-hydroxyethyl)-1,3-dioxane.

**6.** The thermoplastic resin composition according to any one of claims 1 to 5, wherein diol units other than the diol units having a cyclic acetal skeleton constituting the polyester resin (B) are diol units derived from one or more types of diols selected from the group consisting of ethylene glycol, diethylene glycol, trimethylene glycol, 1,4-butanediol and 1,4-cyclohexanedimethanol.

7. The thermoplastic resin composition according to any one of claims 1 to 6, wherein the polyester resin (B) contains aromatic dicarboxylic acid units at a ratio of 70 mol% or more relative to all dicarboxylic acid units constituting the polyester resin (B).

8. The thermoplastic resin composition according to claim 7, wherein the aromatic dicarboxylic acid units are dicarboxylic acid units derived from one or more types of dicarboxylic acids selected from the group consisting of terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid.

9. The thermoplastic resin composition according to any one of claims 1 to 8, wherein the titanium atoms in the polyester resin (B) are derived from a titanate compound.

10. A molded body containing the thermoplastic resin composition according to any one of claims 1 to 9.

11. An extrusion molded body containing the thermoplastic resin composition according to any one of claims 1 to 9.

12. An injection molded body containing the thermoplastic resin composition according to any one of claims 1 to 9.

## Patentansprüche

1. Eine thermoplastische Harzzusammensetzung, welche umfasst: ein Polycarbonatharz (A); und ein Polyesterharz (B), welches Dioleinheiten mit einem cyclischen Acetalgerüst in einem Anteil von 20 bis 60 mol-%, bezogen auf alle Dioleinheiten, die das Polyesterharz (B) bilden, enthält, und welche die nachfolgenden Punkte (1) bis (4) erfüllt:

   (1) das Polyesterharz (B) enthält 20 bis 150 ppm an Phosphoratomen, die aus einem Monophosphat und/oder einem Monophosphit abgeleitet sind;
   (2) das Polyesterharz (B) enthält 3 bis 25 ppm an Titanatomen;
   (3) das Gewichtsverhältnis zwischen den Phosphoratomen und den Titanatomen in dem Polyesterharz (B) (P/Ti) beträgt 2,5 bis 20,0; und
   (4) das Gewichtsverhältnis des Polycarbonatharzes (A) zu dem Gesamtgewicht des Polycarbonatharzes (A) und des Polyesterharzes (B) beträgt 2 bis 99,5 Gew.-%.

2. Die thermoplastische Harzzusammensetzung nach Anspruch 1, wobei das Polycarbonatharz (A) ein Polycarbonatharz ist, das Wiederholungseinheiten dargestellt durch allgemeine Formel (1) und/oder allgemeine Formel (2) enthält:

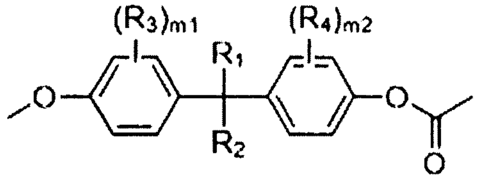

(1)

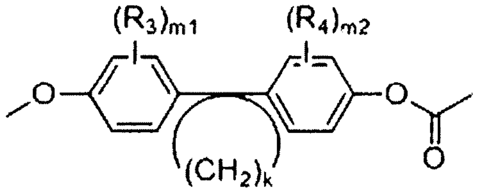

(2)

wobei in den vorstehenden allgemeinen Formeln (1) und (2): $R_1$ und $R_2$ jeweils unabhängig ausgewählt sind aus einem Wasserstoffatom, einer nicht-cyclischen Kohlenwasserstoffgruppe mit 1 bis 10 Kohlenstoffatomen, einer Arylgruppe mit 6 bis 18 Kohlenstoffatomen und einer alicyclischen Kohlenwasserstoffgruppe mit 5 bis 10 Kohlenstoffatomen; $R_3$ und $R_4$ jeweils unabhängig ausgewählt sind aus einem Halogenatom, einer aliphatischen Kohlenwasserstoffgruppe mit 1 bis 10 Kohlenstoffatomen, einer Arylgruppe mit 6 bis 18 Kohlenstoffatomen, einer Oxyalkylgruppe mit 1 bis 10 Kohlenstoffatomen und einer Oxyarylgruppe mit 6 bis 18 Kohlenstoffatomen; m1 und m2

jeweils unabhängig 0 bis 4 sind; und k gleich 4 oder 5 ist.

**3.** Die thermoplastische Harzzusammensetzung nach Anspruch 1, wobei das Polycarbonatharz (A) ein Polycarbonat von Bisphenol A ist.

**4.** Die thermoplastische Harzzusammensetzung nach einem der Ansprüche 1 bis 3, wobei die Dioleinheiten mit einem cyclischen Acetalgerüst aus mindestens einem Diol abgeleitet sind, ausgewählt aus:

einem Diol, dargestellt durch allgemeine Formel (3):

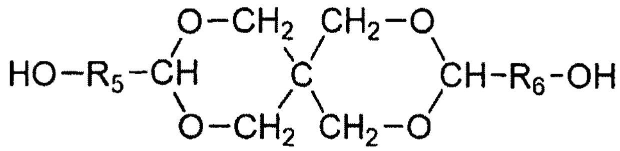 (3)

wobei $R_5$ und $R_6$ jeweils unabhängig eine Kohlenwasserstoffgruppe, ausgewählt aus der Gruppe bestehend aus einer aliphatischen Kohlenwasserstoffgruppe mit 1 bis 10 Kohlenstoffatomen, einer alicyclischen Kohlenwasserstoffgruppe mit 3 bis 10 Kohlenstoffatomen und einer aromatischen Kohlenwasserstoffgruppe mit 6 bis 10 Kohlenstoffatomen, darstellen; und
einem Diol, dargestellt durch allgemeine Formel (4):

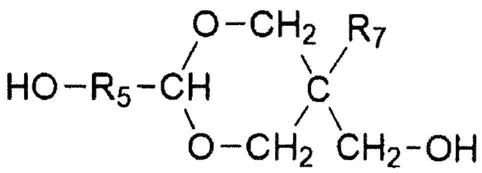 (4)

wobei: $R_5$ wie in Bezug auf Formel (3) definiert ist; und $R_7$ eine Kohlenwasserstoffgruppe, ausgewählt aus der Gruppe bestehend aus einer aliphatischen Kohlenwasserstoffgruppe mit 1 bis 10 Kohlenstoffatomen, einer alicyclischen Kohlenwasserstoffgruppe mit 3 bis 10 Kohlenstoffatomen und einer aromatischen Kohlenwasserstoffgruppe mit 6 bis 10 Kohlenstoffatomen, darstellt.

**5.** Die thermoplastische Harzzusammensetzung nach einem der Ansprüche 1 bis 3, wobei die Dioleinheiten mit einem cyclischen Acetalgerüst von 3,9-Bis(1,1-dimethyl-2-hydroxyethyl)-2,4,8,10-tetraoxaspiro[5.5]undecan abgeleitete Dioleinheiten oder von 5-Methylol-5-ethyl-2-(1,1-dimethyl-2-hydroxyethyl)-1,3-dioxan abgeleitete Dioleinheiten sind.

**6.** Die thermoplastische Harzzusammensetzung nach einem der Ansprüche 1 bis 5, wobei Dioleinheiten, die sich von Dioleinheiten mit einem cyclischen Acetalgerüst, welches das Polyesterharz (B) bildet, unterscheiden, Dioleinheiten sind, die von einer oder mehreren Arten von Diolen, ausgewählt aus der Gruppe bestehend aus Ethylenglykol, Diethylenglykol, Trimethylenglykol, 1,4-Butandiol und 1,4-Cyclohexandimethanol, abgeleitet sind.

**7.** Die thermoplastische Harzzusammensetzung nach einem der Ansprüche 1 bis 6, wobei das Polyesterharz (B) aromatische Dicarbonsäureeinheiten in einem Anteil von 70 mol-% oder mehr, bezogen auf alle Dicarbonsäureeinheiten, die das Polyesterharz (B) bilden, enthält.

**8.** Die thermoplastische Harzzusammensetzung nach Anspruch 7, wobei die aromatischen Dicarbonsäureeinheiten Dicarbonsäureeinheiten sind, die von einer oder mehreren Arten von Dicarbonsäureeinheiten ausgewählt aus der Gruppe bestehend aus Terephthalsäure, Isophthalsäure, 1,4-Naphthalendicarbonsäure, 1,5-Naphthalendicarbonsäure, 2,6-Naphthalendicarbonsäure und 2,7-Naphthalendicarbonsäure abgeleitet sind.

**9.** Die thermoplastische Harzzusammensetzung nach einem der Ansprüche 1 bis 8, wobei die Titanatome in dem Polyesterharz (B) aus einer Titanatverbindung abgeleitet sind.

**10.** Ein Formkörper, enthaltend die thermoplastische Harzzusammensetzung nach einem der Ansprüche 1 bis 9.

**11.** Ein extrusionsgeformter Körper, enthaltend die thermoplastische Harzzusammensetzung nach einem der Ansprüche

1 bis 9.

12. Ein spritzgussgeformter Körper, enthaltend die thermoplastische Harzzusammensetzung nach einem der Ansprüche 1 bis 9.

## Revendications

1. Composition de résine thermoplastique qui comprend : une résine de polycarbonate (A) ; et une résine de polyester (B) qui contient des motifs diol ayant un squelette d'acétal cyclique en une proportion de 20 à 60 % en moles par rapport à tous les motifs diol constituant la résine de polyester (B), et qui satisfait à (1) à (4) ci-dessous :

   (1) la résine de polyester (B) contient 20 à 150 ppm d'atomes de phosphore dérivés d'un monophosphate et/ou d'un monophosphite ;
   (2) la résine de polyester (B) contient 3 à 25 ppm d'atomes de titane ;
   (3) le rapport en poids entre les atomes de phosphore et les atomes de titane dans la résine de polyester (B) (P/Ti) est de 2,5 à 20,0 ; et
   (4) le rapport en poids de la résine de polycarbonate (A) au poids total de la résine de polycarbonate (A) et de la résine de polyester (B) est de 2 à 99,5 % en poids.

2. Composition de résine thermoplastique selon la revendication 1, dans laquelle la résine de polycarbonate (A) est une résine de polycarbonate contenant des motifs répétitifs représentés par la formule générale (1) et/ou la formule générale (2) :

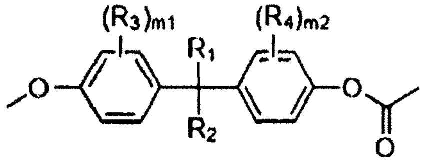

(1)

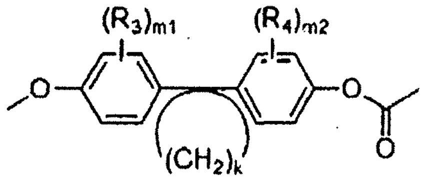

(2)

où, dans les formules générales (1) et (2) ci-dessus : chacun de $R_1$ et $R_2$ est indépendamment choisi parmi un atome d'hydrogène, un groupe hydrocarboné non cyclique ayant 1 à 10 atomes de carbone, un groupe aryle ayant 6 à 18 atomes de carbone et un groupe hydrocarboné alicyclique ayant 5 à 10 atomes de carbone ; chacun de $R_3$ et $R_4$ est indépendamment choisi parmi un atome d'halogène, un groupe hydrocarboné aliphatique ayant 1 à 10 atomes de carbone, un groupe aryle ayant 6 à 18 atomes de carbone, un groupe oxyalkyle ayant 1 à 10 atomes de carbone et un groupe oxyaryle ayant 6 à 18 atomes de carbone ; chacun de m1 et m2 vaut indépendamment de 0 à 4 ; et k vaut 4 ou 5.

3. Composition de résine thermoplastique selon la revendication 1, dans laquelle la résine de polycarbonate (A) est un polycarbonate de bisphénol A.

4. Composition de résine thermoplastique selon l'une quelconque des revendications 1 à 3, dans laquelle les motifs diol ayant un squelette d'acétal cyclique dérivent d'au moins un diol choisi parmi :

   un diol représenté par la formule générale (3) :

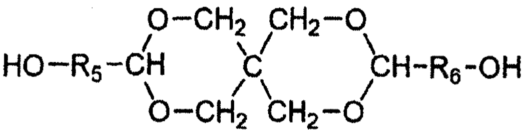

(3)

dans laquelle chacun de $R_5$ et $R_6$ représente indépendamment un groupe hydrocarboné choisi dans le groupe constitué par un groupe hydrocarboné aliphatique ayant 1 à 10 atomes de carbone, un groupe hydrocarboné alicyclique ayant 3 à 10 atomes de carbone et un groupe hydrocarboné aromatique ayant 6 à 10 atomes de carbone ; et

un diol représenté par la formule générale (4) :

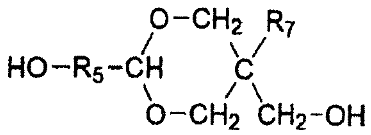

(4)

dans laquelle : $R_5$ est tel que défini dans la formule (3) ; et $R_7$ représente un groupe hydrocarboné choisi dans le groupe constitué par un groupe hydrocarboné aliphatique ayant 1 à 10 atomes de carbone, un groupe hydrocarboné alicyclique ayant 3 à 10 atomes de carbone et un groupe hydrocarboné aromatique ayant 6 à 10 atomes de carbone.

5. Composition de résine thermoplastique selon l'une quelconque des revendications 1 à 3, dans laquelle les motifs diol ayant un squelette d'acétal cyclique sont des motifs diol dérivés de 3,9-bis(1,1-diméthyl-2-hydroxyéthyl)-2,4,8,10-tétraoxaspiro[5.5]undécane ou des motifs diol dérivés de 5-méthylol-5-éthyl-2-(1,1-diméthyl-2-hydroxyéthyl)-1,3-dioxane.

6. Composition de résine thermoplastique selon l'une quelconque des revendications 1 à 5, dans laquelle des motifs diol autre que les motifs diol ayant un squelette d'acétal cyclique constituant la résine de polyester (B) sont des motifs diol dérivés d'un ou plusieurs types de diols choisis dans le groupe constitué par l'éthylène glycol, le diéthylène glycol, le triméthylène glycol, le 1,4-butanediol et le 1,4-cyclohexanediméthanol.

7. Composition de résine thermoplastique selon l'une quelconque des revendications 1 à 6, dans laquelle la résine de polyester (B) contient des motifs acide dicarboxylique aromatique en une proportion de 70 % ou plus par rapport à tous les motifs acide dicarboxylique constituant la résine de polyester (B).

8. Composition de résine thermoplastique selon la revendication 7, dans laquelle les motifs acide dicarboxylique aromatique sont des motifs acide dicarboxylique dérivés d'un ou plusieurs types d'acides dicarboxyliques choisis dans le groupe constitué par l'acide téréphtalique, l'acide isophtalique, l'acide 1,4-naphtalènedicarboxylique, l'acide 1,5-naphtalènedicarboxylique, l'acide 2,6-naphtalènedicarboxylique et l'acide 2,7-naphtalènedicarboxylique.

9. Composition de résine thermoplastique selon l'une quelconque des revendications 1 à 8, dans laquelle les atomes de titane dans la résine de polyester (B) dérivent d'un composé titanate.

10. Corps moulé contenant la composition de résine thermoplastique selon l'une quelconque des revendications 1 à 9.

11. Corps moulé par extrusion contenant la composition de résine thermoplastique selon l'une quelconque des revendications 1 à 9.

12. Corps moulé par injection contenant la composition de résine thermoplastique selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000063641 A
- JP 2000103948 A
- JP 2003246925 A
- JP 2005002237 A
- JP 2011219667 A
- JP 2013121991 A
- JP 2015016952 A


### Non-patent literature cited in the description


- Handbook of Saturated Polyester Resins. Nikkan Kogyo Shimbun, Ltd, 22 December 1989, 454-456